# EUROPEAN PATENT APPLICATION

(11) **EP 1 886 828 A1**
(43) Date of publication of application: **13.02.2008**
(21) Application number: 06729190.6
(22) Date of filing: 15.03.2006
(51) Int. Cl.: B41M 5/26, G11B 7/24

(54) **OPTICAL INFORMATION RECORDING MEDIUM**

(30) Priority: 16.03.2005 JP 2005075424
(71) Applicant: FUJIFILM Corporation, Minato-ku Tokyo 106-0031 (JP)
(72) Inventor: WATANABE, Kousuke c/o FUJIFILM Corporation, Kanagawa (JP); WATANABE, Tetsuya c/o FUJIFILM Corporation, Kanagawa (JP); TAKAHASHI, Keita c/o FUJIFILM Corporation, Kanagawa (JP); KATAYAMA, Kazutoshi c/o FUJIFILM Corporation, Kanagawa (JP)
(74) Representative: HOFFMANN EITLE
(86) International application number: PCT/JP2006/305169
(87) International publication number: WO 2006/098384

(57) **Abstract**

A blue laser-ready information recording medium improved in light stability and durability without impairment of record/playback characteristics is provided.

The information recording medium is an optical information recordingmediumhaving on a substrate a recording layer that permits recording of information by irradiation with laser light of 440 nm or below, and is a heat-mode information recording medium that has a recording layer containing a methine dye and an organic oxidant on a transparent disk-form substrate on which a pregroove having a track pitch of 0.2 to 0.5 µm is formed, and that on the pregroove-formed side of the substrate.

## Description

### Technical Field

The present invention relates to an optical information recording medium and an information recording method that each permit recording and playback of information by laser light, and to novel compounds suitable for use in such a medium and a method. The invention relates particularly to a heat-mode optical information recording medium suitable for information recording by use of laser light with short wavelengths of 440 nm or below.

### BACKGROUND ARTS

Hitherto, optical information recording media (optical discs) that permit one-time-only recording of information by means of laser light have been known. Such optical discs are referred to as write-once compact discs (the so-called CD-R), and they have a typical structure that a recording layer containing a methine dye, a light reflection layer formed of a metal, such as gold, and a protective layer made from a resin are provided in order of mention in a multilayered state on a disk-form transparent substrate. The recording of information on a CD-R is performed by irradiating a CD-R with laser light in the near infrared region (usually laser light with a wavelength of around 780 nm). More specifically, the recording layer absorbs the laser light in irradiated areas, and the irradiated areas undergo a local rise intemperature, thereby causing a physical or chemical change (e.g., generation of pits) and changing their optical characteristics; as a result, information is recorded on the CD-R. On the other hand, reading (playback) of information from the disc is generally performed by irradiating the disc with laser light of the same wavelength as the laser light used for recording has, and detecting difference in reflectivity between the area having changed in optical characteristics (recorded area) and the area remaining unchanged (unrecorded area) in the recording layer.

Recent years have seen rapid proliferation of networks, such as the Internet, and high definition televisions (HDTV) . With the broadcast on HDTV approaching, there is also a growing need for large-capacity recording media permitting inexpensive-and-convenient recording of image information. Although the CD-Rmentioned above andDVD-R capable of high-density recording by use of visible laser light (630 nmto 680 nm) as recording laser have established themselves as large-capacity recording media to a certain extent, it cannot be said that they have recording capacity large enough to address feature requirements. Therefore, development of optical discs which are improved in recording density by permitting the use of laser light with a shorter wavelength than DVD-R, thereby offering larger recording capacities than the DVD-R, has been pursued. For instance, optical discs in the so-called Blu-ray format using blue laser with the wavelength of 405 nm are currently on the market.

As dye compounds contained in recording layers of optical discs of CD-R type, dyes showing absorption in the near infrared region, such as dicarbocyanine dyes (chain of 5 methine carbons) and tricarbocyanine dyes (chain of 7 methine carbons) having benzoindolenine skeletons (JP-A-64-40382 and JP-A-64-40387), have hitherto been used to advantage. Further, with the intention of enhancing light stability, it has generally been carried out to use singlet oxygen quenchers as discoloration inhibitors in combination with the cyanine dyes mentioned above. For instance, nitroso compounds (JP-A-2-300288) and nickel complexes (JP-A-4-146189) and so on are well known as those discoloration inhibitors.

JP-A-63-64794 proposes the information recording medium which has a recording layer containing a cyanine dye and an electron-accepting layer and is improved in light stability. Therein, tricarbocyanine dyes (chain of 7 methine carbons) having benzoindolenine skeletons and the like are described as examples of the cyanine dye, while tetracyanoquinodimethane (TCNQ) and tetracyanoethylene are described as examples of the electron-accepting compound.

JP-A-10-151861 and JP-A-10-324065 also propose the information recording media each having a recording layer containing a cyanine dye and an electron-accepting compound.

### Disclosure of the Invention

### Problems that the Invention is to Solve

It is known that dyes generally have their maximum absorption at longer wavelengths the wider spread their π-electron systems causing the light absorption. In the cases of cyanine dyes and oxonol dyes in particular, which have been put to practical use in a great many optical discs, the dyes exhibit their individual absorption maxima at longer wavelengths the longer lengths their conjugated methine chains have. Therefore, dyes used in optical recording discs ready for recording and playback with blue laser having a shorter wavelength than the laser light used for DVD-R are required to match the blue laser light and exhibit their absorption maxima at shorter wavelengths than the dyes used in usual DVD-R. So, cyanine dyes or the like which are shortened in maximum absorption-wavelength by shortening the lengths of their conjugated methine chains become a subject of examination, and it becomes important for blue laser-ready optical recording discs to obtain information recording media having highly lightfast recording layers.

An object of the invention is to provide an information recording medium ready for blue laser light, which is improved in light stability and durability without impairment of record/playback characteristics, and an information recording method using such an information recording medium.

### Means for Solving the problem

On the occasion of production of optical recording discs for use of blue laser with wavelengths of 440 nm or below, the Inventors have made comparative study of performances in the presence and the absence of discoloration inhibitors according to the invention. As a result, it has turned out that better record/playback characteristics can be obtained by the presence of discoloration inhibitors according to the invention in recording layers than the absence of discoloration inhibitors of the invention.
By examinations of the Inventors, it has been found that a blue laser-ready information recording medium noticeably improved in light stability and durability without impairment of record/playback characteristics can be produced by combining a methine dye and an organic oxidant, especially a methine dye and an organic oxidant having a reduction potential nobler than -0. 6V, so that the oxidation potential of the methine dye and the reduction potential of the organic oxidant has a certain relation, or by using as a methine dye a cyanine or oxonol dye having a specified structure.

Herein, the reduction potential value of an organic oxidant means the potential at which the organic oxidant is reduced by injection of electrons since it acts as an anode in voltammetry, while the oxidation potential of a methine dye means the potential at which the methine dye is oxidized by ejection of electrons since it acts as a cathode in voltammetry. The oxidation potential and the reduction potential can be measured with precision by the voltammetric system. More specifically, the voltamogram of 1×10⁻³M of an organic oxidant is measured in acetonitrile containing 0.1M of tetra-n-propylammoniumperchlorate as a supporting electrolyte, and the reduction potential of the oxidant is determined as the half-wave potential obtained from this measurement. Additionally, platinum is used as a working electrode and saturated calomel electrode (SCE) is used as a reference electrode, and the measurement is made at 25°C.
The oxidation potential value (Eox) can be measured with ease by persons skilled in the art. Descriptions of methods for such a measurement can be found, e.g., in P. Delahay, New Instrumental Methods in Electrochemistry, Interscience Publishers (1954), A. J. Bard et al., Electrochemical Methods, John Wiley & Sons (1980), and Akira Fujishima et al., Denki Kagaku Sokuteiho, Gihodo Shuppan Co., Ltd. (1984).

In the concrete, 1×10⁻² to 1×10⁻⁶ mole/l of a sample to be examined is dissolved in a solvent, such as dimethylformamide or acetonitrile, containing a supporting electrolyte, such as sodium perchlorate or tetrapropylammonium perchlorate, and the oxidation potential of the sample is measured as a value relative to the SCE (saturated calomel electrode) by the use of cyclic voltammetry or direct-current polarography. Although this value may deviate by up to several decades millivolt or so under the influences of liquid-junction potential difference, liquid resistance of a sample solution and so on, the repeatability of potential can be ensured by introduction of a standard sample (e.g., hydroquinone).
Additionally, for unique definition in the invention, the value (vs SCE) measured in acetonitrile (dye concentration: 0.001 moldm⁻³) containing 0.1 moldm⁻³ of tetrapropylammonium perchlorate as a supporting electrolyte is adopted as the oxidation potential of a dye.
The objects of the invention are achieved favorably by makeups described below.

[1] A heat-mode information recording medium which is an optical information recording medium having on a substrate a recording layer which permits recording of information by irradiation with laser light of 440 nm or below, wherei-n the recording layer comprises a methine dye and an organic oxidant.
[2] The heat-mode information recording medium as described in [1], wherein the substrate is a transparent disk-form substrate on which a pregroove having a track pitch of 0. 2 to 0. 5 µm is formed and the recording layer is provided on the pregroove-formed side of the substrate.
[3] The information recording medium as described in [1] or [2], wherein the methine dye has an oxidation potential b in a range of 0.5<b<1.2.
[4] The information recording medium as described in any of [1] to [3], comprising a recording layer containing the organic oxidant whose reduction potential is nobler than -0.4 volt.
[5] The information recording medium as described in any of [1] to [4], wherein the organic oxidant is a quaternary ammonium ion or a pyridinium ion.
[6] The information recording medium as described in any of [1] to [5], wherein the organic oxidant is a compound represented by the following general formula (D) or (E).

[Ka1]

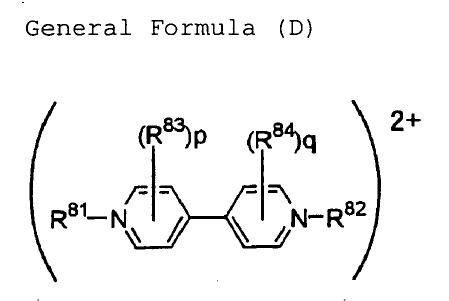

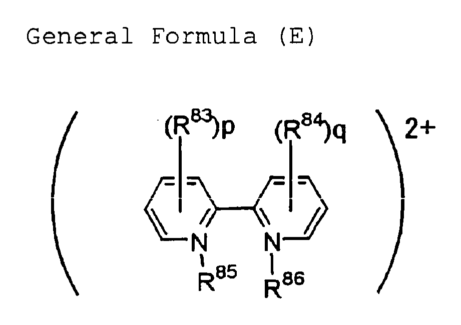

[In the formulae, R⁸¹ and R⁸² represent alkyl groups, alkenyl groups or aryl groups . R⁸³ and R⁸⁴ represent substituent groups (including substituent atoms). R⁸⁵ and R⁸⁶ represent alkyl groups, alkenyl groups, alkynyl groups or aryl groups . Additionally, R⁸¹ and R⁸², R⁸³ and R⁸⁴, or R⁸⁵ and R⁸⁶ may combine with each other to form a ring. p and q represent integers of 0 to 4 and, when p is 2 or above, R⁸³s may be the same or different, while when q is 2 or above R⁸⁴s may be the same or different.]
[7] The information recording medium as described in any of [1] to [6], wherein the methine dye is an oxonol dye represented by general formula (C-1).

### General Formula (C-1)

[Ka2]

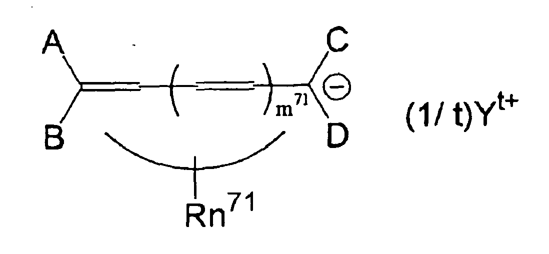

[In the formula, A, B, C and D represent electron-attracting groups, and A and B, or C and D may combine with each other to form a ring, but when they don't combine with each other, A and B are electron-attracting groups whose Hammett's σp values have a combined total of 0.6 or above, and C and D are also electron-attracting groups whose Hammett's σp values have a combined total of 0.6 or above. R represents a substituent on a methine carbon, m⁷¹ represents an integer of 0 or 1, n⁷¹ represents an integer of 0 to 2m⁷¹+1, when n⁷¹ is an integer of 2 or above, a plurality of Rs may be the same or different or they may combine with each other to form a ring, Y^{t+} represent a t-valent cation, and t represents an integer of 1 to 10.]
The combined use of an oxonol dye represented by the general formula (C-1) and a compound represented by the general formula (D) or (E) described in [8] is preferred, and the use of such an oxonol dye in combination with a compound represented by the general formula (D) is far preferred.
[8] The information recording medium as described in any of [1] to [7], wherein the methine dye is an oxonol dye represented by general formula (C-II), general formula (C-III) or general formula (C-IV).

### General Formula (C-II)

[Ka3]

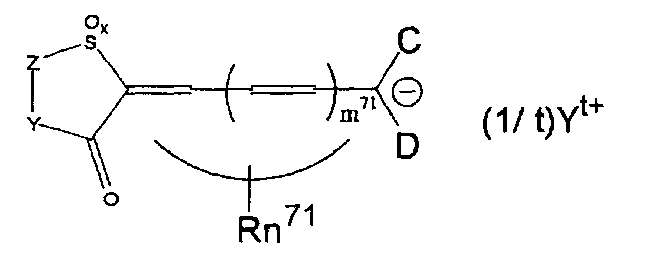

General Formula (C-III)

[Ka4]

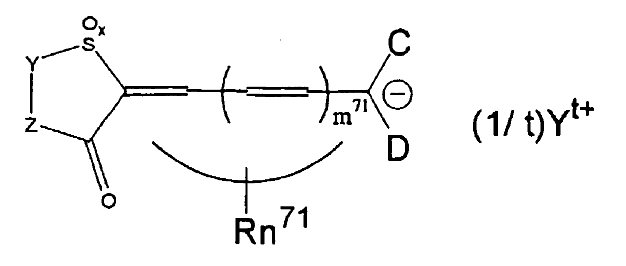

General Formula (C-IV)

[Ka5]

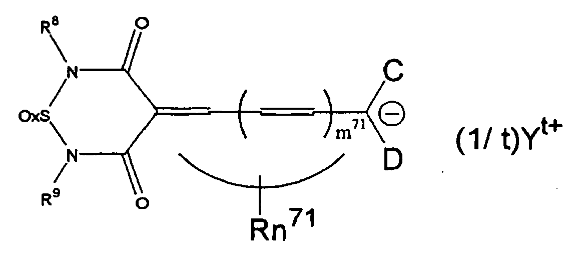

[In the formulae, C and D represent electron-attracting groups, and they may combine with each other to form a ring, but in the case of forming no ring, C and D are electron-attracting groups whose Hammett's σp values have a combined total of 0.6 or above. R represents a substituent on a methine carbon, m⁷¹ represents an integer of 0 or 1, n⁷¹ represents an integer of 0 to 2m⁷¹+1, when n⁷¹ is an integer of 2 or above, a plurality of Rs may be the same or different or they may combine with each other to form a ring, Y^{t+} represent a t-valent cation, and t represents an integer of 1 to 10. Y represents either of -O-, or -NR¹-, or -CR²R³-, R¹, R², R³, R⁸ and R⁹ each represent a hydrogen atom or a substituent independently, Z represents a substituted or unsubstituted alkylene group, and x represents 1 or 2.]
[9] The information recording medium as described in any of [1] to [7], wherein the methine dye is an oxonol dye represented by general formula (C-V) or general formula (C-VI).

### General Formula (C-V)

[Ka6]

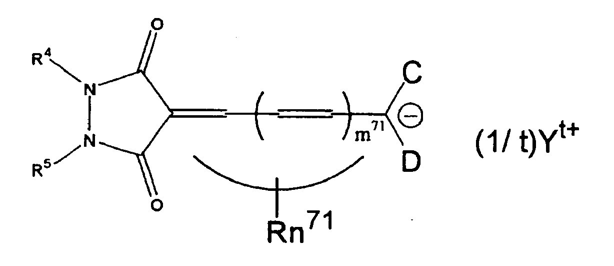

General formula (C-VI)

[Ka7]

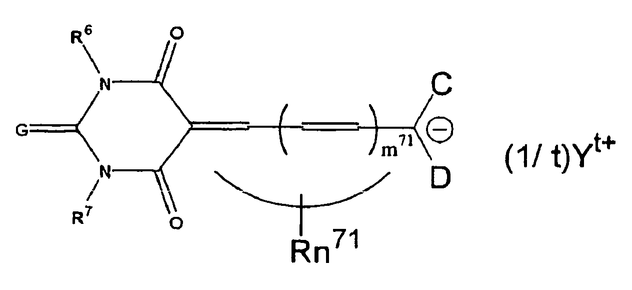

[In the formulae, C and D represent electron-attracting groups, and they may combine with each other to form a ring, but in the case of forming no ring, C and D are electron-attracting groups whose Hammett's σp values have a combined total of 0.6 or above. R represents a substituent on a methine carbon, m⁷¹ represents an integer of 0 or 1, n⁷¹ represents an integer of 0 to 2m⁷¹+1, when n⁷¹ is an integer of 2 or above, a plurality of Rs may be the same or different or they may combine with each other to form a ring, Y^{t+} represent a t-valent cation, and t represents an integer of 1 to 10. R⁴ to R⁷ each represent a hydrogen atom or a substituent independently, and G represents an oxygen atom or a sulfur atom.]
[10] The information recording medium as described in any of [7] to [9], wherein the m⁷¹ is 0.
[11] The information recording medium as described in any of [1] to [4], wherein the organic oxidant is a compound represented by the following general formula (A).

### General Formula (A):

[Ka8]

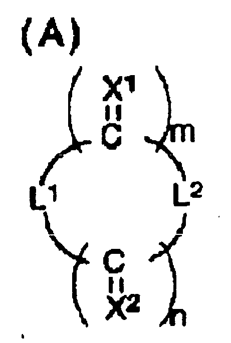

[In the formula, X¹ and X² each represent an oxygen atom, a sulfur atom, a =NR¹ group or a =CR²R³ group independently, m and n represent integers of 0 to 3 as far as they satisfy m+n≥2, R¹, R² and R³ each represent a hydrogen atom or a substituent independently, and L¹ and L² each represent a divalent linkage group independently.]
[12] The information recording medium as described in [11], wherein the organic oxidant is a compound represented by the following general formula (A-I).

### General Formula (A-1):

[Ka9]

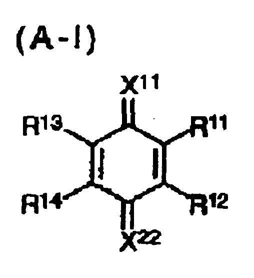

[In the formula, X¹¹ and X¹² each represent an oxygen atom, a sulfur atom, a =NR⁸ group or a =CR⁹R¹⁰ group independently, R⁸, R⁹ and R¹⁰ each represent a hydrogen atom or a substituent independently, and R¹¹, R¹², R¹³ and R¹⁴ each represent a hydrogen atom or a substituent independently, or R¹¹ and R¹², or R¹³ and R¹⁴ may combine with each other to form an unsaturated fused ring.]
[13] The information recording medium as described in [11] or [12], wherein the organic oxidant is a compound represented by the following general formula (A-II).

### General Formula (A-II):

[Ka10]

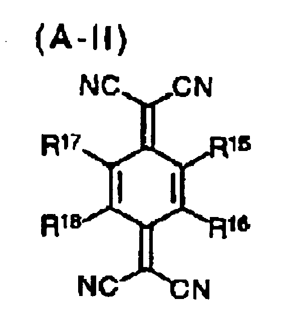

[In the formula, R¹⁵, R¹⁶, R¹⁷ and R¹⁸ each represent a hydrogen atom or a substituent independently, or R¹⁵ and R¹⁶, or R¹⁷ and R¹⁸ may combine with each other to form an unsaturated fused ring.]
[14] The information recording medium as described in [1], wherein the methine dye is a cyanine dye represented by the following general formula (B-I).

[Ka11]

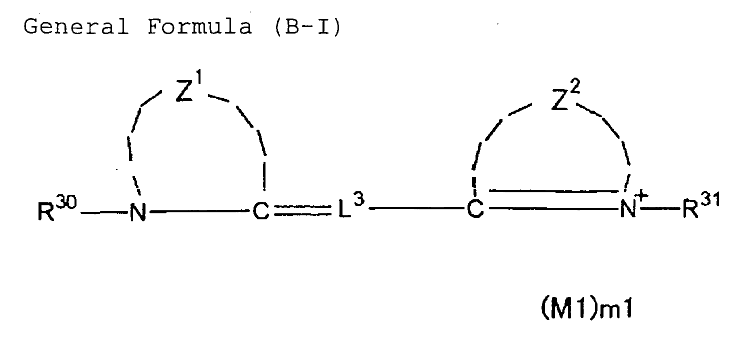

[In the formula, Z¹ and Z² each independently represent atoms necessary to form a 5- or 6-membered nitrogen-containing heterocyclic ring, R³⁰ and R³¹ each independently represent an alkyl group which may be substituted, L³ represents a methine group which may be substituted, M1 represents a counter ion for neutralizing electric charges, and m1 represents a number of 0 or above which is necessary to neutralize electric charges in a molecule.]
[15] The information recording medium as described in [14], wherein the methine dye is a cyanine dye representedby the following general formula (B-II), general formula (B-III) or general formula (B-IV).

[Ka12]

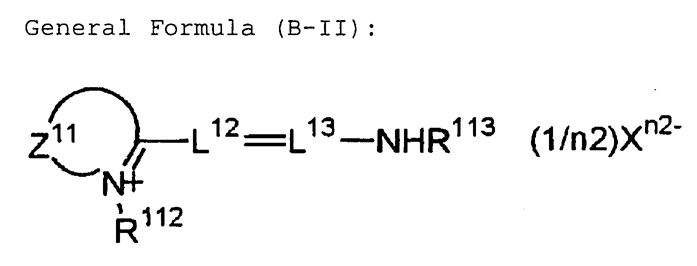

[In the formula, Z¹¹ represents atoms necessary to form a 5- or 6-membered nitrogen-containing heterocyclic ring which may have a substituent, R¹¹² and R¹¹³ each independently represent an alkyl group, an aryl group, an aralkyl group or a heterocyclic group, L¹² and L¹³ each independently represent a methine group which may have a substituent, Xⁿ²⁻ represents an organic or inorganic n2-valent anion, and n2 represents an integer of 1 to 5.]

[Ka13]

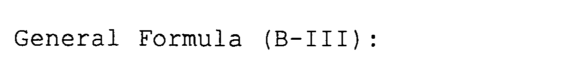

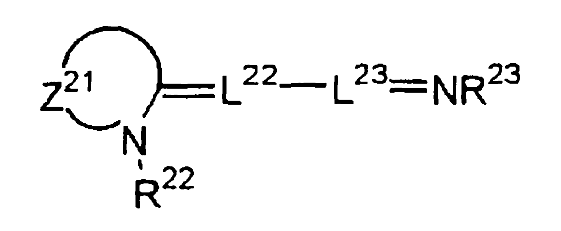

[In the formula, Z²¹ represents atoms necessary to form a 5- or 6-membered nitrogen-containing heterocyclic ring which may have a substituent, R²² and R²³ each independently represent an alkyl group, an aryl group, an aralkyl group or a heterocyclic group, and L²² and L²³ each independently represent a methine group which may have a substituent.]

[Ka14]

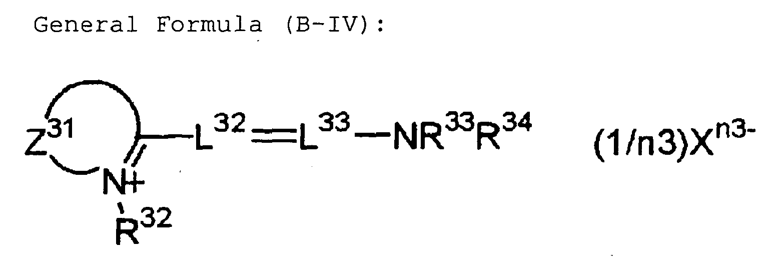

[In the formula, Z³¹ represents atoms necessary to form a 5- or 6-membered nitrogen-containing heterocyclic ring which may have a substituent, R³² represents an alkyl group, an aryl group, an aralkyl group or a heterocyclic group, and R³³ and R³⁴ each independently represent an alkyl group, an aralkyl group or a heterocyclic group, or R³³ and R³⁴ may combine with each other to form a heterocyclic ring. L³² and L³³ each independently represent a methine group which may have a substituent, Xⁿ³⁻ represents an organic or inorganic n3-valent anion, and n3 represents an integer of 1 to 5.]
It is preferable that a cyanine dye representedby the general formula (B-II), the general formula (B-III) or the general formula (B-IV) is used in combination with a compound of the general formula (A) described in [4] (preferably a compound of the general formula (A-I) described in [5], far preferably a compound of the general formula (A-II) described in [6]).
[16] The heat-mode optical information recording medium having on a substrate a recording layer which permits recording of information by irradiation with laser light of 440 nm or below as described in any of [1] to [15], wherein the recording layer in which a methine dye and an organic oxidant having a reduction potential nobler than -0.4 volt are contained and they are combined so as to satisfy a relation of 1.0≤b-a≤1.3 with respect to a difference between an oxidation potential b volt of the methine dye and a reduction potential a volt of the organic oxidant is provided on a transparent disk-form substrate on which a pregroove having a track pitch of 0.2 to 0.5 µm is formed, and that on the side where the pregroove is formed.

### Advantage of the Invention

By combining a methine dye and an organic oxidant to be incorporated into a recording layer so that the methine dye and the organic oxidant have specified relations between their potentials and between their specific chemical structures, it becomes possible to produce an information recording medium which permits recording of information by irradiation with laser light of 440 nm or below without impairment of record/playback characteristics and ensures high light stability and storage stability under high temperature and high humidity even after recording.

### Best Mode for Carrying Out the Invention

The invention is an information recording medium having on a substrate a recording layer that permits recording of information by irradiation with laser light of 440 nm or below.

It is preferable that the inventionhas the following aspects. The information recording medium according to the invention has a recording layer containing a methine dye and an organic oxidant on a transparent disk-form substrate on which a pregroove having a track pitch of 0.2 to 0.5 µm is formed. The organic oxidant for use in the invention is a compound whose reduction potential a (V) is nobler than -0. 4V. It is preferable that the reduction potential a (V) of the organic oxidant is in the range -0.4<a<0.5 (preferably -0.4<a<0.2, far preferably -0.4<a<-0.1). On the other hand, the oxidation potential b (V) may be in the range 0. 5<b<1. 2 (preferably in the range 0.6<b<1.1, far preferably in the range 0.6<b<1.0).

In the invention, when such an organic oxidant and a methine dye as specified above are used, they are combined so that a difference between the oxidation potential a(V) of the methine dye and the reduction potential b (V) of the organic oxidant satisfies a relation of 0<b-a<1.6 (preferably 0.4<b-a<1.5, far preferably 0.7<b-a<1.4). It is especially preferable for them to satisfy the relation of 1.0≤b-a≤1.3.

In addition, it is preferable in the invention to use as the methine dye a cyanine dye represented by the general formula (B-I), the general formula (B-II), the general formula (B-III) or the general formula (B-IV), or an oxonol dye represented by the general formula (C-1) in combination with the organic oxidant as specified above. And it is far preferable to use an organic oxidant represented by the general formula (A) (preferably the general formula (A-I), far preferably the general formula (A-II), (A-III) or (A-IV)) in combination with a cyanine dye represented by the general formula (B-II), (B-III) or (B-IV).
It is further preferable to use an organic oxidant represented by the general formula (D) or the general formula (E) in combination with an oxonol dye represented by the general formula (C-1).
Further, it is particularly preferable to use an organic oxidant representedby the general formula (D) or the general formula (E) in combination with an oxonol dye represented by the general formula (C-II), the general formula (C-III), the general formula (C-IV), the general formula (C-V) or the general formula (C-VI).

Organic oxidants and methine dyes for use in the invention are illustrated below.
Firstly, organic oxidants suitable for methine dyes are illustrated. As the organic oxidants used for methine dyes, carbocyclic or heterocyclic compounds each having a plurality of exocyclic double bonds, or quaternary ammonium ions, or pyridinium ions are suitable, and carbocyclic or heterocyclic compounds each having a plurality of exocyclic double bonds, or pyridinium ions are more suitable.
When the methine dyes are cyanine dyes, organic oxidants suitably used in combination therewith are carbocyclic or heterocyclic compounds each having a plurality of exocyclic double bonds (preferably organic oxidants represented by the general formula (A) (preferably organic oxidants represented by the general formula (A-1), far preferably organic oxidants represented by the general formula (A-II), (A-III) or (A-IV))) .
When the methine dyes are oxonol dyes, organic oxidants suitably used in combination therewith are quaternary ammonium ions or pyridinium ions, preferably pyridinium ions (especially organic oxidants represented by the general formula (D) or the general formula (E)).

### Methine Dyes

Carbocyclic or heterocyclic compounds each having a plurality of exocyclic double bonds are illustrated.
Examples of atoms constituting such a cycle include not only carbon but also nitrogen, oxygen, sulfur and selenium. Examples of a carbocyclic or heterocyclic compound having a plurality of exocyclic double bonds which can be used in the invention include compounds represented by the following general formula (A).

[Ka15]

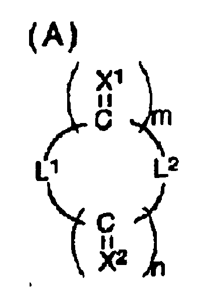

In the above formula, X¹ and X² each represent an oxygen atom, a sulfur atom, a =NR¹ group or a =CR²R³ group independently. m and n represent integers of 0 to 3 so as to satisfy m+n≥2. R¹, R² and R³ each represent a hydrogen atom or a substituent independently. And L¹ and L² each represent a divalent linkage group independently.

The organic oxidants represented by the general formula (A) are described below in detail. In the general formula (A), it is preferable that both m and n are 1. The substituents represented by R¹, R² and R³ are halogen atoms, or substituent groups formed by combining hydrogen atoms, carbon atoms and oxygen, nitrogen and/or sulfur atoms. Examples of such substituent groups include alkyl groups, alkenyl groups, aralkyl groups, aryl groups, heterocyclic groups, a cyano group, a nitro group, a mercapto group, a hydroxyl group, alkoxy groups, aryloxy groups, alkylthio groups, arylthio groups, acyloxy groups, an amino group, alkylamino groups, amido groups, sulfonamido groups, sulfamoylamino groups, alkoxycarbonylamino groups, alkoxysulfonylamino groups, ureido groups, thioureido groups, acyl groups, alkoxycarbonyl groups, carbamoyl groups, alkylsulfonyl groups, alkylsulfinyl groups, sulfamoyl groups, carboxyl groups (including salts thereof), and sulfo groups (including salts thereof). These groups may further be substituted with any of these groups.

The examples of substituents represented by R¹, R² and R³ are described in further detail. The halogen atoms include a fluorine atom, a chlorine atom and a bromide atom. The alkyl groups are 1-18C (preferably 1-6C) linear, branched or cyclic alkyl groups which may have substituents, with examples includingmethyl, ethyl, propyl, isopropyl, t-butyl, cyclopentyl, cyclohexyl, 2-hydroxyethyl, 3-hydroxypropyl, 4-hydroxybutyl, 3-methoxypropyl, 2-aminoethyl, acetamidomethyl, 2-acetamidoethyl, carboxymethyl, 2-carboxyethyl, 2-sulfoethyl, ureidomethyl, 2-ureidoethyl, carbamoylmethyl, 2-carbamoylethyl, 3-Carbamoylpropyl, pentyl, hexyl, octyl, decyl, undecyl, dodecyl, hexadecyl and octadecyl. The alkenyl groups are 2-18C (preferably 2-6C) linear, branched or cyclic alkenyl groups, with examples including vinyl, allyl, 1-propenyl, 2-pentenyl, 1,3-butadienyl, 2-octenyl and 3-dodecenyl.

The aralkyl groups are 7-10C aralkyl groups, such as a benzyl group. The aryl groups are 6-10C aryl groups which may have substituents, with examples including phenyl, naphthyl, p-dibutylaminophenyl and p-methoxyphenyl. The heterocyclic groups are 5- to 6-membered saturated or unsaturated heterocyclic groups made up of carbon and nitrogen, oxygen or/and sulfur atoms, wherein the number and the kind of hetero atoms forming each ring may be one or more than one, with examples including furyl, benzofuryl, pyranyl, imidazolyl, isooxazolyl, pyrazolyl, benzotriazolyl, pyridyl, pyrimidyl, pyridazinyl, thienyl, indolyl, quinolyl, phthalazinyl, quinoxalinyl, pyrrolidinyl, pyrrolinyl, imidazolidinyl, imidazolinyl, pyrazolidinyl, piperidyl, piperazinyl, indolinyl and morpholinyl. '

The alkoxy groups are 1-18C (preferably 1-6C) alkoxy groups which may have substituents, with examples including methoxy, ethoxy, propoxy, isopropoxy, butoxy, 2-methoxyethoxy, 2-methanesulfonylethoxy, pentyloxy, hexyloxy, octyloxy, undecyloxy, dodecyloxy, hexadecyloxy and octadecyloxy. The aryloxy groups are 6-10C aryloxy groups which may have substituents, with examples including phenoxy and p-methoxyphenoxy. The alkylthio groups are 1-18C (preferably 1-6C) alkylthio groups which may have substituents, with examples including methylthio, ethylthio, octylthio, undecylthio, dodecylthio, hexadecylthioand octadecylthio. The arylthio groups are 6-10C arylthio groups which may have substituents, with examples including phenylthio and 4-methoxyphenylthio. The acyloxy groups are 1-18C (preferably 1-6C) acyloxy groups, with examples including acetoxy, propanoyloxy, pentanoyloxy, octanoyloxy, dodecanoyloxy and octadecanoyloxy.

The alkylamino groups are 1-18C (preferably 1-6C) alkylamino groups, with examples including methylamino, dimethylamino, diethylamino, dibutylamino, octylamino, dioctylamino and undecylamino. The amido groups are 1-18C (preferably 1-6C) amido groups, with examples including acetamido, acetylmethylamino, acetyloctylamino, acetyldecylamino, acetylundecylamino, acetyloctadecylamino, propanoylamino, pentanoylamino, octanoylamino, octanoylmethylamino, dodecanoylamino, dodecanoylmethylamino and octadecanoylamino. The sulfonamido groups are 1-18C (preferably 1-6C) sulfonamido groups which may have substituents, with examples including methanesulfonamido, ethanesulfonamido, propylsulfonamido, 2-methoxyethylsulfonamido, 3-aminopropylsulfonamido, 2-acetamidoethylsulfonamido, octylsulfonamido and undecylsulfonamido.

The alkoxycarbonylamino groups are 2-18C (preferably 2-6C) alkoxycarbonylamino groups, with examples including methoxycarbonylamino, ethoxycarbonylamino, octyloxycarbonylamino and undecyloxycarbonylamino. The alkoxysulfonylamino groups are 1-18C (preferably 1-6C) alkoxysulfonylamino groups, with examples including methoxysulfonylamino, ethoxysulfonylamino, octyloxysulfonylamino and undecyloxysulfonylamino. The sulfamoylamino groups are 0-18C (preferably 0-6C) sulfamoylamino groups, with examples including methylsulfamoylamino, dimethylsulfamoylamino, ethylsulfamoylamino, propylsulfamoylamino, octylsulfamoylamino and undecylsulfamoylamino.

The ureido groups are 1-18C (preferably 1-6C) ureido groups which may have substituents, with examples including ureido, methylureido, N,N-dimethylureido, octylureido and undecylureido. The thioureido groups are 1-18C (preferably 1-6C) thioureido groups which may have substituents, with examples including thioureido, methylthioureido, N,N-dimethylthioureido, octylthioureido and undecylthioureido. The acyl groups are 1-18C (preferably 1-6C) acyl groups, with examples including acetyl, benzoyl, octanoyl, decanoyl, undecanoyl and octadecanoyl. The alkoxycarbonyl groups are 2-18C (preferably 2-6C) alkoxycarbonyl groups, with examples including methoxycarbonyl, ethoxycarbonyl, octyloxycarbonyl and undecyloxycarbonyl.

The carbamoyl groups are 1-18C (preferably 1-6C) carbamoyl groups which may have substituents, with examples including carbamoyl, N,N-dimethylcarbamoyl, N-ethylcarbamoyl, N-octylcarbamoyl, N,N-dioctylcarbamoyl and N-undecylcarbamoyl. The alkylsulfonyl groups are 1-18C (preferably 1-6C) alkylsulfonyl groups which may have substituents, with examples including methanesulfonyl, ethanesulfonyl, 2-chloroethanesulfonyl, octanesulfonyl and undecanesulfonyl. The alkylsulfinyl groups are 1-18C (preferably 1-6C) alkylsulfinyl groups, with examples including methanesulfinyl, ethanesulfinyl and octanesulfinyl. The sulfamoyl groups are 0-18C (preferably 0-6C) sulfamoyl groups which may have substituents, with examples including sulfamoyl, dimethylsulfamoyl, ethylsulfamoyl, octylsulfamoyl, dioctylsulfamoyl and undecylsulfamoyl.

L¹ and L² each represent a divalent linkage group independently. Herein, the divalent linkage group is made up of carbon, nitrogen, oxygen or/and sulfur atoms and forms a 4- to 8-membered ring together with the carbon atoms to which X¹ and X² are bound respectively. Examples of L¹ and L² each include divalent linkage groups formed by combining two or more of -C(R⁴) (R⁵)-, -C(R6)=, -N(R⁷)-, -N=, -O- and -S- . Herein, R⁴, R⁵, R⁶ and R⁷ each represent a hydrogen atom or a substituent, and details of the substituent are the same as those explainedabout R¹, R² and R³. In addition, the 4- to 8-membered ring may form a saturated or unsaturated fused ring, and examples of the fused ring include a cycloalkyl ring, an aryl ring and a heterocyclic ring. The details of these rings are the same as those explained about R¹, _{R}² and _{R}³.

The 4- to 8-membered rings are described in further detail. Examples of the 4-membered ring include cyclobutanedione, cyclobutenedione and benzocyclobetenequinone. Examples of the 5-membered ring include cyclopentanedione, cyclopentenedione, cyclopentanetrione, cyclopentenetrione, indanedione, indanetrione, tetrahydrofurandione, tetrahydrofurantrione, tetrahydropyrroledione, tetrahydropyrroletrione, tetrahydrothiophenedione and tetrahydrothiophenetrione. Examples of the 6-membered ring include benzoquinone, quinomethane, quinodimethane, quinoneimine, quinonediimine, thiobenzoquinone, dithiobenzoquinone, naphthoquinone, anthraquinone, dihydrochromenetrione, dihydropyridinedione, dihydropyrazinedione, dihydropyrimidinedione, dihydropyridazinedione, dihydrophthalazinedione, dihydroisoquinolinedione and tetrahydroquinolinetrione.

Examples of the 7-membered ring include cycloheptanedione, cycloheptanetrione, azacycloheptanetrione, diazacycloheptanetrione, oxocycloheptanetrione, dioxocycloheptanetrione and oxoazacycloheptanetrione. Examples of the 8-membered ring include cyclooctainedione, cyclooctanetrione, azacyclooctanetrione, diazacyclooctanetrione, oxocyclooctanetrione, dioxocyclooctanetrione, oxoazacyclooctanetrione, cyclooctenedione, cyclooctadienedione and dibenzocyclooctenedione. The ring that L¹ and L² form in concert with the carbon atoms to which X¹ and X² are bound is preferably a 6-membered ring.

The carbocyclic or heterocyclic compounds each having a plurality of exocyclic double bonds are preferably compounds represented by the following formula (A-I).

[Ka16]

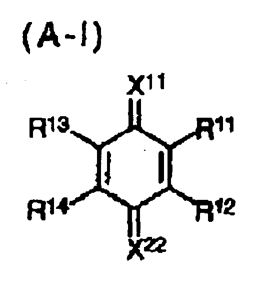

In the above formula, X¹¹ and X¹² each represent an oxygen atom, a sulfur atom, =NR⁸ or =CR⁹R¹⁰ independently. R⁸, R⁹ and R¹⁰ each represent a hydrogen atom or a substituent independently. The groups =NR⁸ and =CR⁹R¹⁰ that may be represented by each of X¹¹ and X¹² have the same meanings as =NR¹ and =CR²R³, respectively, which may be represented by each of X¹ and X² in the general formula (A), and preferred ranges thereof are also the same as those of =N^{R1} and =CR²R³. And the substituents represented by R⁸, R⁹ and R¹⁰ have the same meanings as the substituents represented by R¹, R² and R³ in the general formula (A), and their preferred ranges are also the same. R¹¹, R¹², R¹³ and R¹⁴ each represent a hydrogen atom or a substituent independently. When both R¹¹ and R¹², or both R¹³ and R¹⁴ are substituents, they may combine with each other to form an unsaturated fused ring. The unsaturated fused ring formed may have a substituent, and examples of the substituent include the same ones as explained about the foregoing R¹, R² and R³.

It is preferable that the foregoing X¹¹ and X²² are each an oxygen atom or =CR⁹R¹⁰, and it is far preferable that both X¹¹ and X²² are oxygen atoms or =CR⁹R¹⁰ groups. Herein, each of R⁹ and R¹⁰ is preferably a halogen atom, a cyano group, an acyl group, an alkoxycarbonyl group or an alkylsulfonyl group. The case where both X¹¹ and X²² are oxygen atoms is explained.
When both X¹¹ and X²² are oxygen atoms, it is preferable that at least two of R¹¹, R¹², R¹³ and R¹⁴ are electron-attracting groups. Herein, the term "electron-attracting group" as used herein means a substituent having a positive Hammett's σp value, with examples including a halogen atom, a cyano group, a nitro group, an acyl group, an alkoxycarbonyl group, a carbamoyl group, an alkylsulfonyl group and an alkylsulfinyl group. When both X¹¹ and X²² are oxygen atoms, especially suitable combinations of R¹¹, R¹², R¹³ and R¹⁴ are cases where each of R¹¹, R¹², R¹³ and R¹⁴ is a hydrogen atom, an alkyl group, a halogen atom, a cyano group, a nitro group, an alkoxy group, an alkylthio group, an amino group, an alkylamino group, an amido group, a sulfonamido group, a sulfamoylamino group, an alkoxycarbonylamino group, an alkoxysulfonylamino group, an ureido group, a thioureido group, an acyl group, an alkoxycarbonyl group, a carbamoyl group, an alkylsulfonyl group, an alkylsulfinyl group or a sulfamoyl group, provided that at least two of R¹¹, R¹², R¹³ and R¹⁴ are electron-attracting groups.

In most suitable combinations, each of R¹¹, R¹², R¹³ and R¹⁴ is a hydrogen atom, a 1-6C alkyl group, a halogen atom, a cyano group, a 1-6C alkoxy group, a 1-6C alkylthio group, a 1-6C amido group, a 1-6C sulfonamido group, a 1-6C ureido group, a 1-6C acyl group, a 2-6C alkoxycarbonyl group, a 1-6C carbamoyl group, a 1-6C alkylsulfonyl group or a 1-6C alkylsulfinyl group, provided that at least two of R¹¹, R¹², R¹³ and R¹⁴ are halogen atoms, cyano groups, alkylsulfonyl groups or alkylsulfinyl groups.

When both X¹¹ and X²² are =CR⁹R¹⁰, it is far preferable that the carbocyclic or heterocyclic compounds each having a plurality of exocyclic double bonds are compounds representedby the following general formula (A-II).

[Ka17]

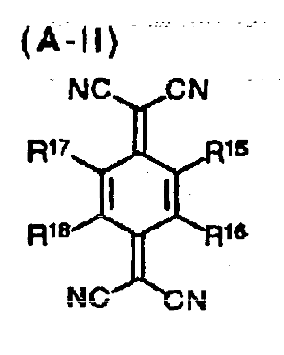

In the above formula, R¹⁵, R¹⁶, R¹⁷ and R¹⁸ have the same meanings as those explained about the foregoing R¹¹ to R¹⁴, respectively.

It is especially preferable that the carbocyclic or heterocyclic compounds each having a plurality of exocyclic double bonds are compounds represented by the following general formula (A-III) or (A-IV).

[Ka18]

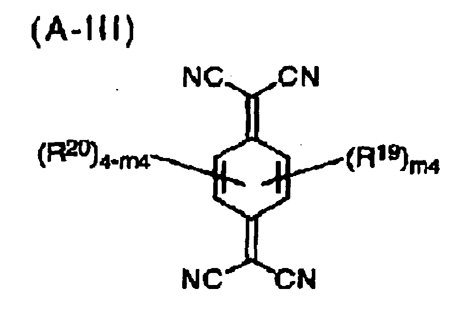

In the above formula, R¹⁹ represents a halogen atom, a cyano group, an alkoxy group, an alkylthio group, an amido group, a sulfonamido group, an ureido group, an acyl group or an alkoxycarbonyl group. R²⁰ means the same ones as explained about the foregoing R¹ to R³. m4 represents an integer of 1 to 4 and, when m4 or 4-m4 is an integer of 2 or above, plural R¹⁹s may be the same or different and plural R²⁰s may also be the same or different.

[Ka19]

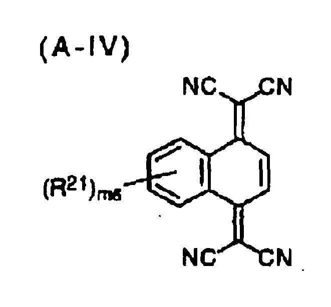

-In the above formula, R²¹ represents a hydrogen atom or a substituent. Herein, the substituent has the same meaning as those explained about the foregoing R¹ to R³. m5 represents an integer of 0 to 6 and, when m5 represents an integer of 2 or above, plural R²¹s may be the same or different.

Preferred combinations of R¹⁹ and R²⁰ in the general formula (A-III) are described. Combinations in which R¹⁹ is a halogen atom, a cyano group, a 1-6C alkoxy group, a 1-8C acyl group or a 2-6C alkoxycarbonyl group and R²⁰ is a hydrogen atom or a 1-6C alkyl group are preferred, and the best combination consists in that R¹⁹ is a 1-6C alkoxy group and R²⁰ is a hydrogen atom.

In the general formula (A-IV), R²¹ is preferably a hydrogen atom, an alkyl group, a halogen atom, a cyano group, an alkoxy group, an alkylthio group, an amido group, a sulfonamido group, a ureido group or an acyl group, far preferably a hydrogen atom, a 1-6C alkyl group, a halogen atom, a cyano group, a 1-6C alkoxy group, a 1-6C alkylthio group, a 1-6C amido group, a 1-6C sulfonamido group, a 1-6C ureido group or a 1-6C acyl group, particularly preferably a hydrogen atom, a 1-6C alkyl group, a fluorine atom, a chlorine atom, a bromine atom, a cyano group or a 1-6C alkoxy group. Among them, a hydrogen atom is the best.

Specific examples of a carbocyclic or heterocyclic compound having a plurality of exocyclic double bonds, which is an organic oxidant for methine dyes for use in the invention, include the organic oxidants disclosed in JP-A-10-151861 and JP-A-10-324065, and the compounds illustrated below, but these examples should not be construed as limiting the range of the organic oxidants usable in the invention.

[Ka20]

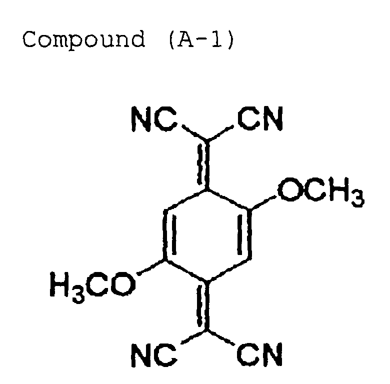

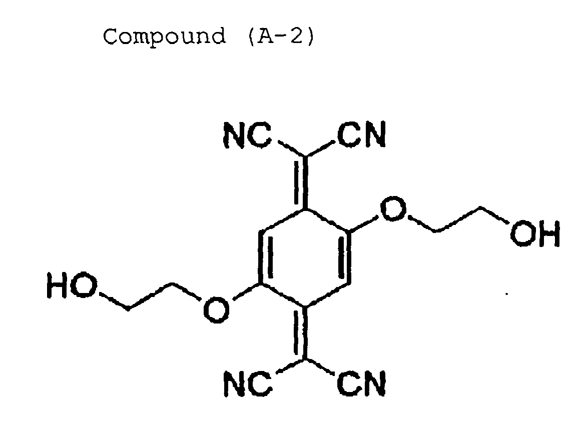

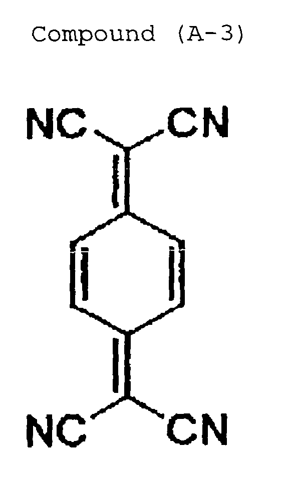

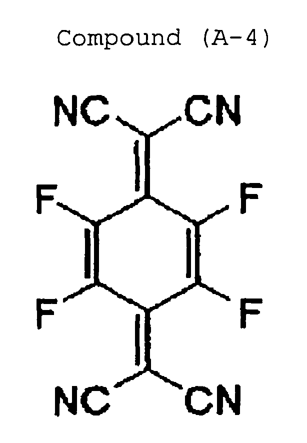

Pyridinium ions are explained. Examples of a pyridinium ion include N-alkylpyridinium, N-alkenylpyridinium, N-alkynylpyridiniumandN-arylpyridinium. More specific examples of a pyridinium ion include 1-60C substituted or unsubstituted N-alkylpyridinium, 1-60C substituted or unsubstituted N-alkenylpyridinium, 1-60C substituted or unsubstituted N-alkynylpyridinium, and 1-60C substituted or unsubstituted N-arylpyridinium.

The pyridinium ions are preferably compounds represented by the foregoing general formula (D) or general formula (E).

The general formula (D) and the general formula (E) are explained. The alkyl groups represented by R⁸¹, R⁸², R⁸⁵ and R⁸⁶ are preferably 1-18C substituted or unsubstituted linear, branched or cyclic alkyl groups, far preferably 1-8C substituted or unsubstituted linear, branched or cyclic alkyl groups, such as methyl, ethyl, n-propyl, isopropyl, n-butyl, isobutyl, n-hexyl, cyclohexyl and cyclopropyl. Examples of substituents that those alkyl groups may have include halogen atoms (e.g., F, Cl, Br), 1-18C, preferably 1-8C, alkoxy groups (e.g., methoxy, ethoxy), 6-10C aryloxy groups (e.g., phenoxy, p-methoxyphenoxy), 1-18C, preferably 1-8C, alkylthio groups (e.g., methylthio, ethylthio), 6-10C arylthio groups (e.g., phenylthio), 2-18C, preferably 2-8C, acyl groups (e.g., acetyl, propionyl), 2-18C, preferably 2-8C, acyloxy groups (e.g., acetoxy, propionyloxy), 2-18C, preferably 2-8C, alkoxycarbonyl groups (e.g., methoxycarbonyl, ethoxycarbonyl), 2-18C, preferably 2-8C, alkenyl groups (e.g., vinyl), 2-18C, preferably 2-8C, alkynyl groups (e.g., ethynyl), 6-10C aryl groups (e.g., phenyl, naphthyl), 7-11C aryloxycarbonyl groups (e.g., naphthoxycarbonyl), 0-18C, preferably 0-8C, amino groups (e.g., unsubstituted amino, methylamino, dimethylamino, diethylamino, anilino, methoxyphenylamino, chlorophenylamino, morpholino, piperidino, pyrrolidino, pyridylamino, methoxycarbonylamino, n-butoxycarbonylamino, phenoxycarbonylamino, methylcarbamoylamino, phenylcarbamoylamino, acetylamino, ethylcarbonylamino, cyclohexylcarbonylamino, benzoylamino, chloroacetylamino, methylsulfonylamino), 1-18C, preferably 1-8C, carbamoyl groups (e.g., unsubstituted carbamoyl, methylcarbamoyl, ethylcarbamoyl, n-butylcarbamoyl, t-butylcarbamoyl, dimethylcarbamoyl, morpholinocarbamoyl, pyrrolidinocarbamoyl), 0-18C, preferably 0-8C, sulfamoyl groups (e.g., unsubstituted sulfamoyl, methylsulfamoyl, phenylsulfamoyl), a cyano group, a nitro group, a carboxyl group, a hydroxyl group, and heterocyclic groups (e.g., oxazole, benzoxazole, thiazole, benzothiazole, imidazole, benzimidazole, indolenine, pyridine, sulfolane, furan, thiophene, pyrazole, pyrrole, chroman, coumarin).

The alkenyl groups represented by R⁸¹, R⁸², R⁸⁵ and R⁸⁶ are preferably 2-18C, especially 2-8C, substituted or unsubstituted linear, branched or cyclic alkenyl groups, such as vinyl, allyl, isopropenyl, 1-propenyl, 1,3-butadienyl and cyclohexenyl. Substituents the alkenyl groups may have are identical with the substituents recited above as those which the alkyl groups may have, except for alkenyl groups.

The alkynyl groups represented by R⁸¹, R⁸², R⁸⁵ and R⁸⁶ are preferably 2-18C, especially 2-8C, substituted or unsubstituted linear, branched or cyclic alkynyl groups, such as ethynyl and 2-propynyl. Substituents the alkynyl groups may have are identical with the substituents recited above as those which the alkyl groups may have, except for alkynyl groups.

The aryl groups represented by R⁸¹, R⁸², R⁸⁵ and R⁸⁶ are preferably 6-18C, especially 6-10C, substituted or unsubstituted aryl groups, such as phenyl and naphthyl. Substituents the aryl groups may have are identical with the substituents recited above as those which the alkyl groups may have, and thereto alkyl groups (e.g., methyl, ethyl) are further added.

R⁸¹ and R⁸² may combine with each other to form a ring. When the ring is formed, it is preferable that carbon atoms, or carbon and nitrogen atoms, or nitrogen atoms present in R⁸¹ and R⁸², respectively, are bound together. And the binding between carbon atoms is far preferred, and the binding between methylene groups is especially preferred.

It is preferable that R⁸⁵ and R⁸⁶ combine with each other to form a ring. The ring formed is preferably a 5-, 6- or 7-membered ring, far preferably a 6-membered ring. Although the ring is formed by combining carbon atoms, or carbon and nitrogen atoms, or nitrogen atoms present in R⁸⁵ and R⁸⁶, respectively, it is preferable that carbon atoms present in R⁸⁵ and R⁸⁶, respectively, are bound together to form a ring. And the ring formed by combining methylene groups is far preferred.

Examples of substituents represented by R⁸³ and R⁸⁴ include 1-18C, preferably 1-8C, substituted or unsubstituted linear, branched or cyclic alkyl groups (e.g., methyl, ethyl, propyl, isopropyl, n-butyl, isobutyl, sec-butyl, t-butyl, cyclohexyl, methoxyethyl, ethoxycarbonylethyl, cyanoethyl, diethylaminoethyl, hydroxyethyl, chloroethyl, acetoxyethyl), 7-18C, preferably 7-12C, substituted or unsubstituted aralkyl groups (e.g., benzyl, carboxybenzyl), 2-18C, preferably 2-8C, alkenyl groups (e.g., vinyl), 2-18C, preferably 2-8C, alkynyl groups (e.g., ethynyl), 6-18C, preferably 6-10C, substituted or unsubstituted aryl groups (e.g., phenyl, 4-methylphenyl, 4-methoxyphenyl, 4-carboxyphenyl, 3,5-dicarboxyphenyl), 2-18C, preferably 2-8C, substituted or unsubstituted acyl groups (e.g., acetyl, propionyl, butanoyl, chloroacetyl), 1-18C, preferably 1-8C, substituted or unsubstituted sulfonyl groups (e.g., methanesulfonyl, p-toluenesulfonyl), 2-18C, preferably 2-8C, alkoxycarbonyl groups (e.g., methoxycarbonyl, ethoxycarbonyl), 7-18C, preferably 7-12C, aryloxycarbonyl groups (e.g., phenoxycarbonyl, 4-methylphenoxycarbonyl, 4-methoxyphenylcarbonyl), 1-18C, preferably 1-8C, substituted or unsubstituted alkoxy groups (e.g., methoxy, ethoxy, n-butoxy, methoxyetlioxy), 6-18C, preferably 6-10C, substituted or unsubstituted aryloxy groups (e.g., phenoxy; 4-methoxyphenoxy), 2-18C,- preferably 2-8C, substituted or unsubstituted acyloxy groups (e.g., acetoxy, ethylcarbonyloxy, cyclohexylcarbonyloxy, benzoyloxy, chloroacetyloxy), 1-18C,preferably 1-8C, substituted or unsubstituted sulfonyloxy group (e.g., methanesulfonyloxy), 2-18C, preferably 2-8C, carbamoyloxy groups (e.g., methylcarbamoyloxy, diethylcarbamoyloxy), 0-18C, preferably 0-8C, substituted or unsubstituted amino groups (e.g., unsubstituted amino group, methylamino, dimethylamino, diethylamino, anilino, methoxyphenylamino, chlorophenylamino, morpholino, piperidino, pyrrolidino, pyridylamino, methoxycarbonylamino, n-butoxycarbonylamino, phenoxycarbonylamino, methylcarbamoylamino, phenylcarbamoylamino, ethylthiocarbamoylamino, methylsulfamoylamino, phenylsulfamoylamino, acetylamino, ethylcarbonylamino, ethylthiocarbonylamino, cyclohexylcarbonylamino, benzoylamino, chloroacetylamino, methylsulfonylamino, benzenesulfonylamino), 1-18C, preferably 1-8C, substituted or unsubstituted carbamoyl groups (e.g., unsubstituted carbamoyl, methylcarbamoyl, ethylcarbamoyl, n-butylcarbamoyl, t-butylcarbamoyl, dimethylcarbamoyl, morpholinocarbamoyl, pyrrolidinocarbamoyl), 0-18C, preferably 0-8C, substituted or unsubstituted sulfamoyl groups (e.g., unsubstituted sulfamoyl, methylsulfamoyl, phenylsulfamoyl), halogen atoms (e.g., fluorine, chlorine, bromine), a hydroxyl group, a nitro group, a cyano group, a carboxyl group and heterocyclic groups.

The substituents represented by R⁸³ and R⁸⁴ are preferably hydrogen atoms or alkyl groups. And it is especially preferred that both R⁸³ and R⁸⁴ are hydrogen atoms.

R⁸³ and R⁸⁴ may combine with each other to form a carbocyclic ring or heterocyclic ring. The ring formed from them is preferably a carbocyclic ring, far preferably a fused aromatic ring formed by being fused together with the pyridine rings to which they are attached.

Examples of quaternary ammonium ions represented by the foregoing general formulae (D) and (E) include the cation parts of the compounds disclosed in JP-A-10-109475, JP-A-10-297103 and JP-A-2001-63211, but they are not limited to these cation parts.

Secondly, methine dyes which can be used in the invention are illustrated. Examples of usable methine dyes include cyanine dyes, merocyanine dyes, phthalocyanine dyes, oxonol dyes, pyrylium dyes, thiopyrylium dyes, triarylmethane dyes, polymethine dyes, squalilium dyes, azulenium dyes, naphthoquinone dyes, anthraquinone dyes, indophenol dyes, indoaniline dyes, aminium/diimmonium dyes and pyran dyes.
In the invention, it is preferable to use cyanine dyes represented by the following general formula (B-I), (B-II), (B-III) or (B-IV), or oxonol dyes represented by the following general formula (C-I).

### General Formula (B-1)

[Ka21]

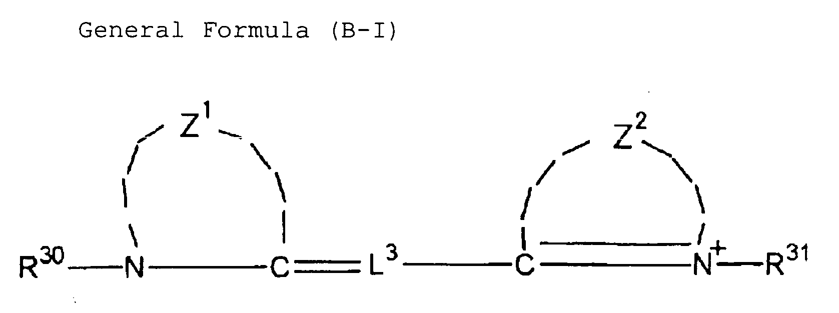

[In the formula, Z¹ and Z² each independently represent atoms necessary to form a 5- or 6-membered nitrogen-containing heterocyclic ring, R³⁰ and R³¹ each independently represent an alkyl group, L³, L⁴ and L⁵ each independently represents a methine group, M1 represents a counter ion for neutralizing electric charges, and m1 represents a number of 0 or above which is necessary to neutralize electric charges in a molecule.]

[Ka22]

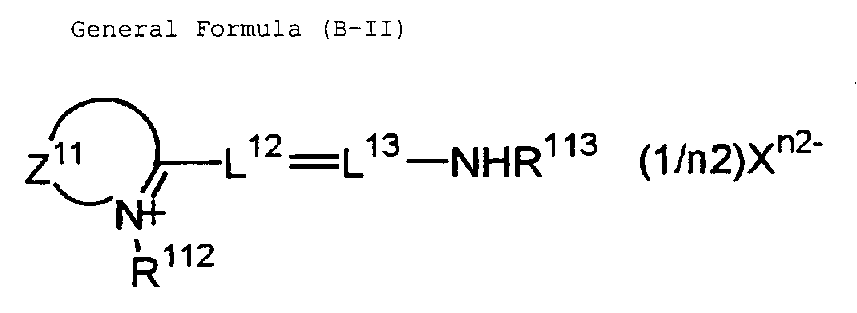

[In the formula, Z¹¹ represents atoms necessary to form a 5- or 6-membered nitrogen-containing heterocyclic ring which may have a substituent, R¹¹² and R¹¹³ each independently represent an alkyl group, an aryl group, an aralkyl group or a heterocyclic group, L¹² and L¹³ each independently represent a methine group which may have a substituent, Xⁿ²⁻ represents an organic or inorganic n2-valent anion, and n2 represents an integer of 1 to 5.]

[Ka23]

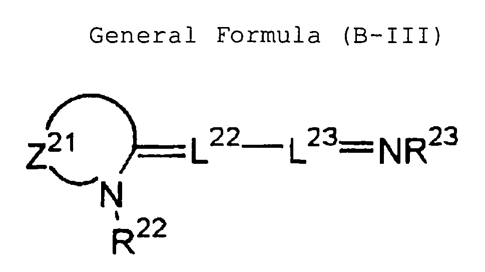

[In the formula, Z²¹ represents atoms necessary to form a 5- or 6-membered nitrogen-containing heterocyclic ring which may have a substituent, R²² and R²³ each independently represent an alkyl group, an aryl group, an aralkyl group or a heterocyclic group, and L²² and L²³ each independently represent a methine group which may have a substituent.]

[Ka24]

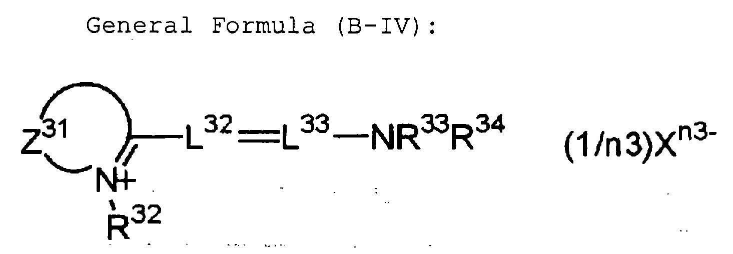

[In the formula, Z³¹ represents atoms necessary to form a 5- or 6-membered nitrogen-containing heterocyclic ring which may have a substituent, R³² represents an alkyl group, an aryl group, an aralkyl group or a heterocyclic group, and R³³ and R³⁴ each independently represent an alkyl group, an aralkyl group or a heterocyclic group, or they may combine with each other to form a ring. L³² and L³³ each independently represent a methine group which may have a substituent, Xⁿ³⁻ represents an organic or inorganic n-valent anion, and n represents an integer of 1 to 5.]

### General Formula (C-1)

[Ka25]

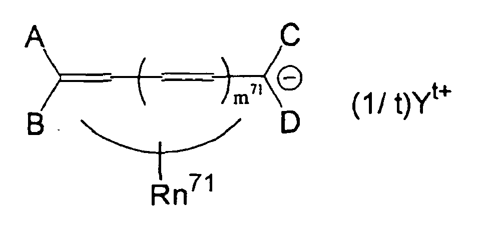

[In the formula, A, B, C and D represent electron-attracting groups, and A and B, or C and D may combine with each other to form a ring, but when they don't combine with each other, A and B are electron-attracting groups whose Hammett's σp values have a combined total of 0.6 or above, and C and D are also electron-attracting groups whose Hammett's σp values have a combined total of 0.6 or above. R represents a substituent on a methine carbon, m⁷¹ represents an integer of 0 or 1, n⁷¹ represents an integer of 0 to 2m⁷¹+1, when n⁷¹ is an integer of 2 or above, a plurality of Rs may be the same or different or they may combine with each other to form a ring, Y^{t+} represent a t-valent cation, and t represents an integer of 1 to 10.]

The cyanine dyes represented by the general formula (B-I) are described below in detail.
Z¹ and Z² each independently represent atoms necessary to form a 5- or 6-membered nitrogen-containing heterocyclic ring. Examples of a nucleus that each of Z¹ and Z² forms include a 3,3-dialkylindolenine nucleus, a 3,3-dialkylbenzoindolenine nucleus, a thiazole nucleus, a benzothiazole nucleus, a naphthothiazole nucleus, a thiazoline nucleus, an oxazole nucleus, a benzoxazole nucleus, a naphthoxazole nucleus, an oxazoline nucleus, a selenazole nucleus, a benzoselenazole nucleus, a naphthoselenazole nucleus, a selenazoline nucleus, a tellurazole nucleus, a benzotellurazole nucleus, a naphthotellurazole nucleus, a tellurazoline nucleus, an imidazole nucleus, a benzimidazole nucleus, a naphthoimidazole nucleus, a pyridine nucleus, a quinoline nucleus, an isoquinoline nucleus, an imidazo[4,5-b]quinoxaline nucleus, an oxadiazole nucleus, a thiadiazole nucleus, a tetrazole nucleus and a pyrimidine nucleus. The 5- and 6-membered nitrogen-containing heterocyclic rings recited above may have substituents when they can have, and examples of such substituents may include the substituents recited as those which R¹, R² and R³ each may represent in the general formula (A) .

Examples of the foregoing substituents are described in more detail. The alkyl group is a 1-18C (preferably 1-8C) linear, branched or cyclic alkyl group which may have a substituent, with examples including methyl, ethyl, propyl, isopropyl, butyl, isobutyl, pentyl, 2-hydroxyethyl, 4-carboxybutyl, hexyl, octyl, benzyl and phenethyl. The alkenyl group is a 2-18C (preferably 2-8C) linear, branched or cyclic alkenyl group, with examples including vinyl, allyl, 1-propenyl, 2-pentenyl, 1,3-butadienyl and 2-octenyl.

The aralkyl group is a 7-10C aralkyl group, such as benzyl. The aryl group is a 6-10C aryl group which may have a substituent, with examples including phenyl, naphthyl, 4-carboxyphenyl, 3-carboxyphenyl, 3,5-dicarboxyphenyl, 4-methanesulfonamidophenyl and 4-butanesulfonamidophenyl. The heterocyclic group is a 5- to 6-membered saturated or unsaturated heterocyclic group made up of carbon and nitrogen, oxygen or/and sulfur atoms, wherein the number and the kind of hetero atoms forming the ring may be one or more than one, with examples including an oxazole ring, a benzoxazole ring, a 5-carboxybenzoxazole ring, a thiazole ring, an imidazole ring, a pyridine ring, a sulfolane ring, a furan ring, a thiophene ring, a pyrazole ring, a pyrrole ring, a chroman ring and a coumarin ring.

The halogen atom may include a fluorine atom, a chlorine atom and a bromine atom. The alkoxy group is a 1-18C (preferably 1-8C) alkoxy groups, with examples including methoxy, ethoxy, propoxy and butoxy. The aryloxy group is a 6-10C aryloxy group which may have a substituent, with examples including phenoxy and p-methoxyphenoxy. The alkylthio group is a 1-18C (preferably 1-8C) alkylthio group, such as methylthio or ethylthio. The arylthio group is a 6-10C arylthio group, such as phenylthio. The acyloxy group is a 1-18C (preferably 1-8C) acyloxy group, such as acetoxy, propanoyloxy, pentanoyloxy or octanoyloxy.

The alkylamino group is a 1-18C (preferably 1-8C) alkylamino group, with examples including methylamino, dimethylamino, diethylamino, dibutylamino and octylamino. The amido group is a 1-18C (preferably 1-8C) amido group, with examples including acetamido, propanoylamino, pentanoylamino, octanoylamino, octanoylmethylamino and benzamido. The sulfonamido group is a 1-18C (preferablyl-8C) sulfonamido group, with examples including methanesulfonamido, ethanesulfonamido, propylsulfonamido, butanesulfonamido and benzenesulfonamido. The alkoxycarbonylamino group is a 1-18C (preferably 1-8C) alkoxycarbonylamino group, such as methoxycarbonylamino or ethoxycarbonylamino. The alkoxysulfonylamino group is a 1-18C (preferably 1-8C) alkoxysulfonylamino group, such as methoxysulfonylamino or ethoxysulfonylamino.

The sulfamoylamino group is a 0-18C (preferably 0-8C) sulfamoylamino group which may have a substituent, with examples including methylsulfamoylamino, dimethylsulfamoylamino, ethylsulfamoylamino, propylsulfamoylamino and octylsulfamoylamino. The ureido group is a 1-18C (preferably 1-8C) ureido group which may have a substituent, with examples including ureido, methylureido, N,N-dimethylureido and octylureido. The thioureido group is a 1-18C (preferably 1-8C) thioureido group which may have a substituent, with examples including thioureido, methylthioureido, N,N-dimethylthioureido and octylthioureido. The acyl group is a 1-18C (preferably 1-8C) acyl group, such as acetyl, benzoyl or propanoyl. The alkoxycarbonyl group is a 1-18C (preferably 2-8C) alkoxycarbonyl group, such as methoxycarbonyl, ethoxycarbonyl or octyloxycarbonyl.

The carbamoyl group is a 1-18C (preferably 1-8C) carbamoyl group which may have a substituent, such as carbamoyl, N,N-dimethylcarbamoyl or N-ethylcarbamoyl. The alkyl- or arylsulfonyl group is a 1-18C (preferably 1-8C) alkylsulfonyl group or an aryl group, such as methanesulfonyl, ethanesulfonyl or benzenesulfonyl. The alkylsulfinyl group is a 1-18C (preferably 1-8C) alkylsulfinyl group, such as methanesulfinyl, ethanesulfinyl oroctanesulfinyl. The sulfamoyl group is a 0-18C (preferably 0-8C) sulfamoyl group which may have a substituent, with examples including sulfamoyl, dimethylsulfamoyl, ethylsulfamoyl, butylsulfamoyl, octylsulfamoyl and phenylsulfamoyl.

Z¹ and Z² each are preferably a substituted or unsubstituted 3,3-dialkylindolenine or 3,3-dialkylbenzoindolenine nucleus.

R³⁰ and R³¹ each represent an alkyl group independently. The alkyl group represented by R³⁰ and R³¹ each is a 1-18C (preferably 1-8C) substituted or unsubstituted linear, branched or cyclic alkyl group, and examples of a substituent such an alkyl group may have are identical with the substituents recited as those which the nitrogen-containing heterocyclic ring may have and preferred ranges thereof are also the same. R³⁰ and R³¹ each are preferably an unsubstituted alkyl group, or an alkyl group substituted with an aryl group, a halogen atom, a hydroxyl group, an alkoxy group, an acyloxy group, an amido group, a sulfonamido group, an alkoxycarbonyl group, a carboxyl group or a sulfo group. Examples of these groups include methyl, ethyl, propyl, butyl, isobutyl, 2-ethylhexyl, octyl, benzyl, 2-phenylethyl, 2-hydroxyethyl, 3-hydroxypropyl, 2-carboxyethyl, 3-carboxypropyl, 4-carboxybutyl, carboxymethyl, 2-methoxyethyl, 2-(2-methoxyethoxy)ethyl, 2-sulfoethyl, 3-sulfopropyl, 3-sulfobutyl, 4-sulfobutyl, 2-(3-sulfopropoxy)ethyl, 2-hydroxy-3-sulfopropyl, 3-sulfopropoxyethoxyethyl, 2-acetoxyethyl, carbomethoxymethyl and 2-methanesulfonylaminoethyl.

The methine group represented by L³ is an unsubstituted or substituted methine group, and details of substituents such a methine group may have are identical with the description of substituents the nitrogen-containing heterocyclic ring may have and preferred ranges of such substituents are also the same. In addition, when the methine group has a substituent, it can form a 5- to 7-membered ring together with an auxochrome.
L³ is preferably an unsubstituted methine group.

M1 represents a counter ion for charge balance. M1 may be either a cation or an anion. Examples of the cation include alkali metal ions, such as sodium ion, potassium ion and lithium ion, and organic ions such as tetraalkylammonium ion and pyridinium ion. The anion may be either an inorganic anion or an organic anion, and examples thereof include halogen anions (e.g., fluoride ion, chloride ion, bromide ion and iodide ion), sulfonate ions (e.g., methanesulfonate ion, trifluoromethanesulfonate ion, methylsulfate ion, p-toluenesulfonate ion, p-chlorobenzensulfonate ion, 1,3-benzenesulfonate ion, 1,5-naphthalenedisulfonate ion, 2, 6-naphthalenedisulfonate ion), sulfate ion, thiocyanate ion, perchlorate ion, tetrafluoroborate ion, picrate ion, acetate ion, metal complex ions illustrated by the following formulae:

[Ka26]

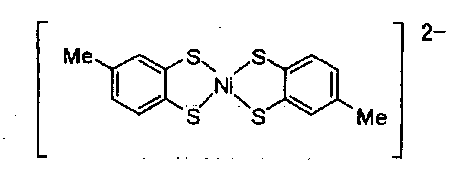

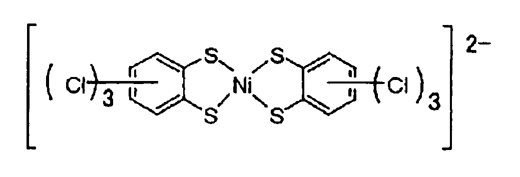

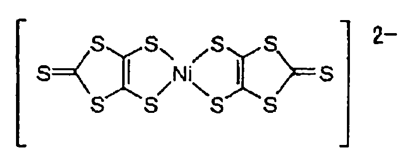

and phosphate ions (e.g., hexafluorophosphate ion, phosphate ion illustrated by the following formula:

[Ka27]

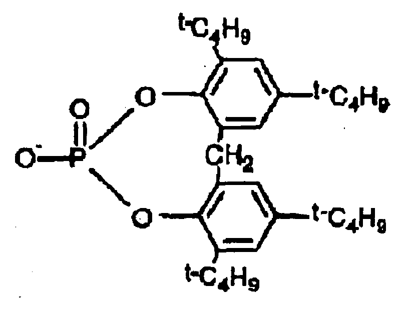

m1 represents a number necessary to balance electric charges (a number of 0 or above, preferably 0 to 4), and the number is 0 when the phosphate forms an inner salt. As to the compounds represented by general formula (B-I), two of the same species may be bound on any of their constituent carbon atoms to form a bis-type structure.

The cyanine dyes represented by the general formula (B-II), the general formula (B-III) and the general formula (B-IV), respectively, are described below in detail. The alkyl groups represented by R¹¹², R¹¹³, R²², R²³, R³², R³³ and R³⁴ are preferably 1-20C chain-form or cyclic alkyl groups which may have substituents (e.g., methyl, ethyl, n-propyl, isopropyl, n-butyl, isobutyl, sec-butyl, tert-butyl, methoxyethyl, hydroxyethyl, n-pentyl, isopentyl, cyclohexyl), far preferably 1-6C alkyl groups, particularly preferably methyl, ethyl, n-propyl, n-butyl or methoxyethyl.

The aryl groups represented by R¹¹², R¹¹³, R²², R²³ and R³² are preferably 6-18C aryl groups which may have substituents (e.g., phenyl, 1-naphthyl, 2-naphthyl, 1-anthracenyl), far preferably phenyl, 1-naphthyl or 2-naphthyl, particularly preferably phenyl.

The aralkyl groups represented by R¹¹², R¹¹³, R²², R²³, R³², R³³ and R³⁴ are preferably 7-18C aralkyl groups which may have substituents (e.g., benzyl, phenethyl, anisyl), particularly preferably benzyl.

The heterocyclic groups represented by R¹¹², R¹¹³, R²², R²³, R³², R³³ and R³⁴ are preferably 4-7C saturated or unsaturated heterocyclic groups which may have substituents, wherein it is preferable that nitrogen, oxygen or/and sulfur atoms in particular are contained as hetero atoms, with examples including 4-pyridyl, 2-pyridyl, 2-pyrazinyl, 2-imidazolyl, 2-furyl, 2-thiophenyl, 2-benzoxazolyl and 2-benzothiooxazolyl.

As R¹¹³ and R²³ each, an aryl group or a heterocyclic group is preferred, an aryl group is far preferred, and phenyl is especially preferred.

In the invention, the foregoing alkyl, aryl, aralkyl and heterocyclic groups are used in the sense that they all represent groups which may have substituents. The following are examples of substituents that R¹¹², R¹¹³, R²², R²³, R³², R³³ and R³⁴ may have: 1-20C chain-form or cyclic alkyl groups (e.g., methyl, ethyl, n-propyl, isopropyl and n-butyl as substituents that groups other than alkyl groups may have), 6-18C substituted or unsubstituted aryl groups (e.g., phenyl, chlorophenyl, anisyl, toluyl, 2,4-di-t-amyl, 1-naphthyl), alkenyl groups (e.g., vinyl, 2-methylvinyl), alkynyl groups (e.g., ethynyl, 2-methylethynyl, 2-phenylethynyl), halogen atoms (e.g., F, Cl, Br, I), a cyano group, a hydroxyl group, a carboxyl group, acyl groups (e.g., acetyl, benzoyl, salicyloyl, pivaroyl), alkoxy groups (e.g., methoxy, butoxy, cyclohexyloxy), aryloxy groups (e.g., phenoxy, 1-naphthoxy), alkylthio groups (e.g., methylthio, butylthio, benzylthio, 3-methoxypropylthio), arylthio groups (e.g., phenylthio, 4-chlorophenylthio), alkylsulfonyl groups (e.g., methanesulfonyl, butanesulfonyl), arylsulfonyl groups (e.g., benzenesulfonyl, p-toluenesulfonyl), 1-10C carbamoyl groups, 1-10C amido groups, 2-12C imido groups, 2-10C acyloxy groups, 2-10C alkoxycarbonyl groups, and heterocyclic groups (e.g., aromatic heterocyclic groups, such as pyridyl, thienyl, furyl, thiazolyl, imidazolyl and pyrazolyl, and groups derived from aliphatic heterocyclic rings, such as a pyrrolidine ring, a piperidine ring, a morpholine ring, a pyran ring, a thiopyran ring, a dioxane ring and a dithiolane ring).

Of the substituents recited above, 1-6C alkyl groups (especially methyl), 6-10C aryl groups (especially phenyl), 1-10C alkoxy groups (especially methoxy) and halogen atoms (especially a chlorine atom) are preferred over the others, and 1-4C alkyl groups, in particular, are favorable.

The methine groups represented by L¹², L¹³, L²², L²³, L³² and L³³ are methine groups which each may have a substituent independently. Examples of such a substituent are identical with the substituents recited as those which the foregoing R¹¹², R¹¹³, R²², R²³, R³², R³³ and R³⁴ may have. The methine group represented by each of L¹², L¹³, L²², L²³, L³² and L³³ is preferably an unsubstituted methine group, or a methine group substituted with an 1-4C alkyl groups (e.g., methyl, ethyl), a phenyl group a chlorine atom, a 1-8C carbamoyl group, a 1-8C amido group or a 2-8C imido group, particularly preferably an unsubstituted methine group or a methine group substituted with a methyl or phenyl group.

The n2-valent and n3-valent anions represented by Xⁿ²⁻ and Xⁿ³⁻ , respectively, may be either organic or inorganic anions. Examples of such an inorganic anion include halide ions, a chlorate ion, perchlorate ion, sulfate ion, hydrogensulfate ion, phosphate ion, hydrogenphosphate ion and tungustophosphate ion. Examples of such an organic anion include carboxylate ions (e.g., acetate ion, trifluoroacetate ion, benzoate ion, succinate ion, maleate ion, fumarate ion, terephthalate ion), sulfonate ions (e.g., methanesulfonate ion, trifluoromethanesulfonate ion, butane-1,4-disulfonate ion, cyclohexane-1,4-disulfonate ion, benzene-1,3-disulfonate ion, 3,3'-diphenyldisulfonate ion, naphthalene-1,5-disulfonate ion, naphthalene-1,6-disulfonate ion, naphthalene-2,6-disulfonate ion, 1-methylnaphthalene-2,6-disulfonate ion, naphthalene-2,7-disulfonate ion, naphthalene-2,8-disulfonate ion, 1-naphthol-3,6-disulfonate ion, 2-naphthol-3,6-disulfonate ion, 2,7-dihydroxy-3,6-disulfonate ion, 2-naphthol-6,8-disulfonate ion, 1,8-dihydroxynaphthalene-3,6-disulfonate ion, 1,5-dihydroxynaphthalene-2,6-disulfonate ion, naphthalene-1,3,5-trisulfonate ion, naphthalene-1,3,6-trisulfonate ion, naphthalene-1,3,7-trisulfonate ion, 1.-naphthol-3, 6, 8-trisulfonate ion; 2-naphthol-3,6,8-trisulfonate ion, naphthalene-1,3,5,7-tetrasulfonate ion) and polysulfate monoesters (e.g., propyleneglycol-1,2-disulfate ion, polyvinyl alcohol polysulfate ion). Of these ions, sulfonate ions are preferred, and arylsulfonate ions are far preferred. n2 and n3 each are preferably an integer of 1 to 4, far preferably an integer of 1 to 3, particularly preferably 2.

Examples of the heterocyclic ring formed by each of Z¹¹, Z²¹ and Z³¹ include a thiazoline ring, a thiazole ring, a benzothiazole ring, an oxazoline ring, an oxazole ring, a benzoxazole ring, a selenazoline ring, a selenazole ring, a benzoselenazole ring, a 3,3-dialkylindolenine ring (e.g., 3,3-dimethylindolenine), a 3,3-dialkylbenzoindolenine ring (e.g., 3,3-dimethylbenzoindolenine), an imidazoline ring, an imidazole ring, a benzimidazole ring, a 2-pyridine ring, 2-quinoline ring, a 1-isoquinoline ring, a 3-isoquinoline ring, an imidazo [4, 5-b] quinoxaline ring, an oxadiazole ring, a thiadiazole ring, a tetrazole ring and a pyrimidine ring. Of these rings, a thiazoline ring, a benzothiazole ring, a benzoxazole ring, a 3,3-dialkylindolenine ring (e.g., 3,3-dimethylindolenine), a 3,3-dialkylbenzoindolenine ring (e.g., 3,3-dimethylbenzoindolenine), a benzimidazole ring, a 2-pyridine ring, a 2-quinoline ring, a 1-isoquinoline ring and a 3-quinoline ring are preferable to the others, a thiazoline ring, a benzothiazole ring, a benzoxazole ring, a 3,3-dialkylindolenine ring (e.g., 3,3-dimethylindolenine), a 3,3-dialkylbenzoindolenine ring (e.g., 3,3-dimethylbenzoindolenine) and a benzimidazole ring are preferable by far, and a thiazoline ring, a benzothiazole ring, a benzoxazole ring, a benzimidazole ring and a 3,3-dimethylindolenine, in particular, are favorable.

The compounds represented by the general formula (B-IV) may assume dimeric forms, preferably forms of dimers represented particularly by the following general formula (B-V).

### General Formula (B-V)

[Ka28]

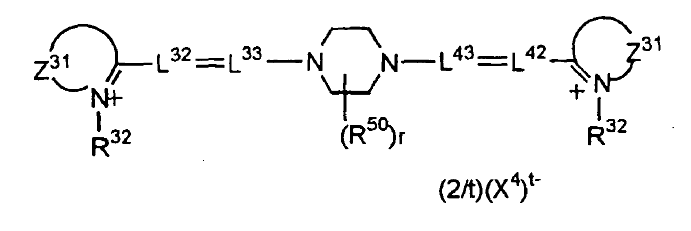

In the formula, Z³¹, R³², L³² and L³³ have the same meanings as in the general formula (B-IV), respectively; L⁴² and L⁴³ have the same meanings as L³² and L³³, respectively; R⁵⁰ represents a substituent on a carbon of the piperazine ring or a fused ring; r represents an integer of 0 to 8; (X⁴)^{t-} represents a t-valent organic or inorganic anion; and t represents an integer of 1 to 5.

Specific compound examples of cyanine dyes include the cyanine dyes disclosed in JP-A-2001-301333 and the compounds illustrated below, but cyanine dyes usable in the invention should not be construed as being limited to these examples.

[Ka29]

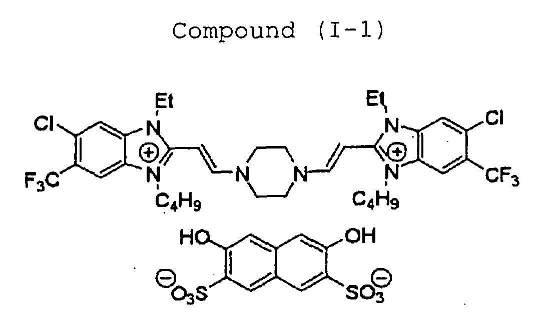

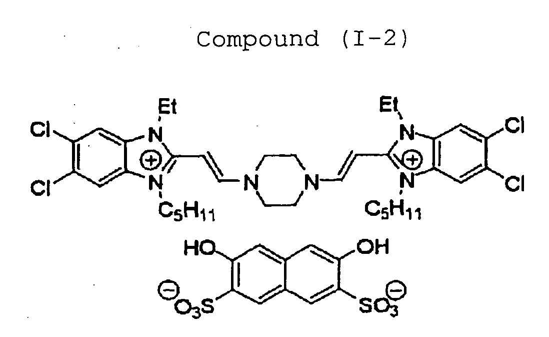

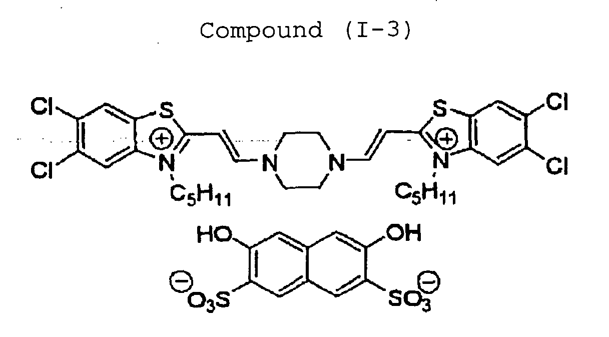

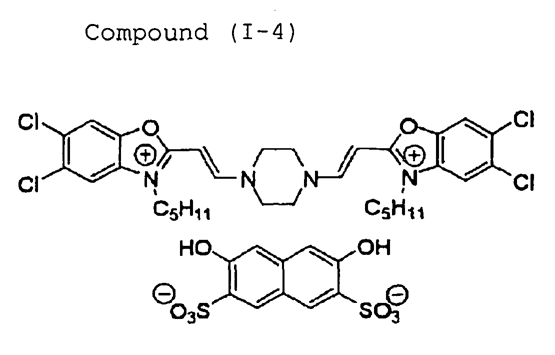

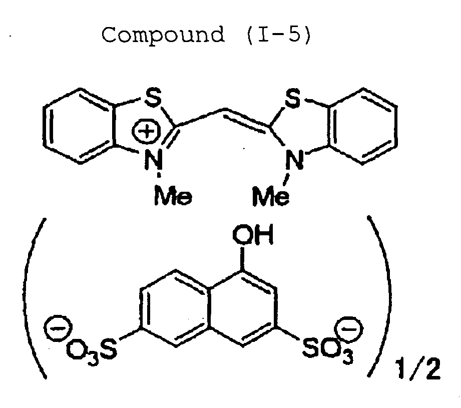

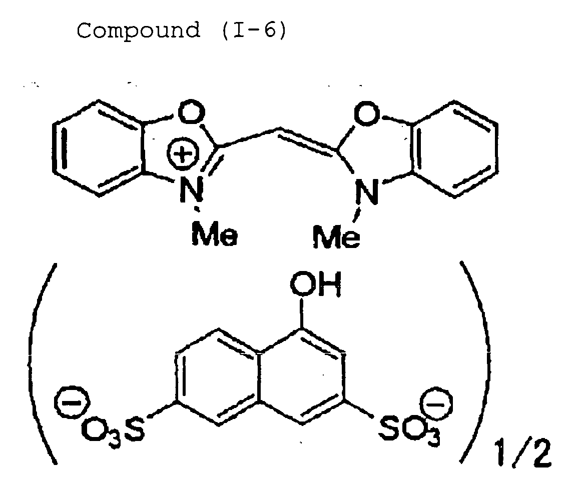

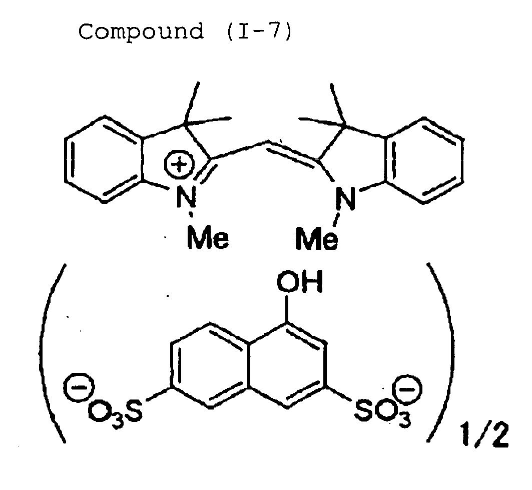

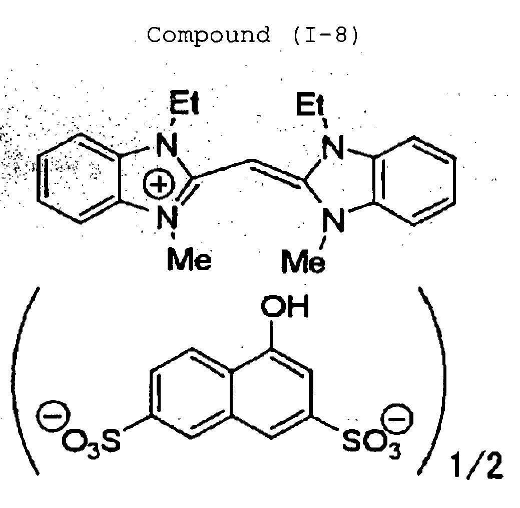

[Ka30]

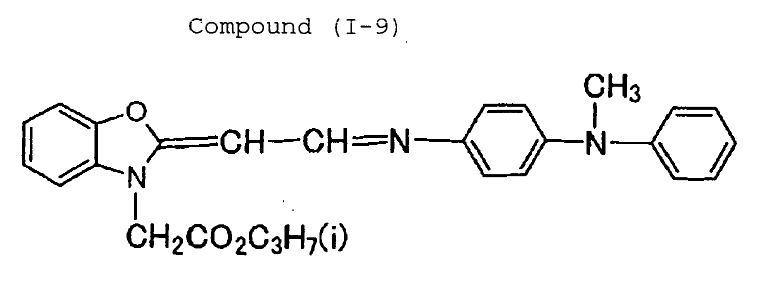

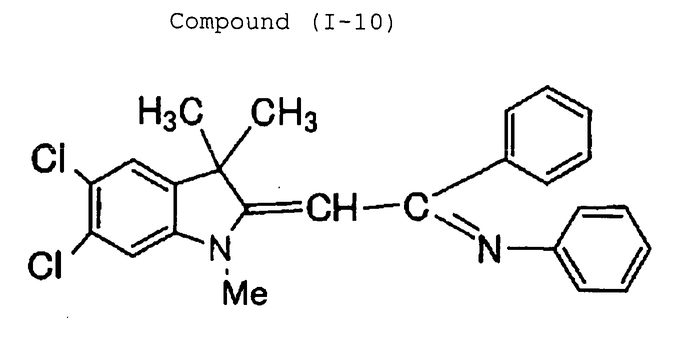

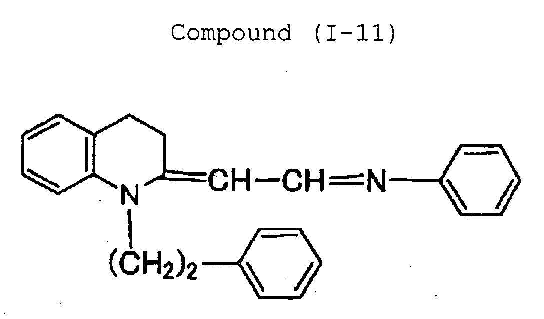

It is preferable that a cyanine dye is paired with an organic oxidant used for the cyanine dye into one molecule. Examples of a compound having a cyanine dye and an organic oxidant in one molecule include the compounds illustrated below, but such compounds should not be construed as being limited to the following.

[Ka31]

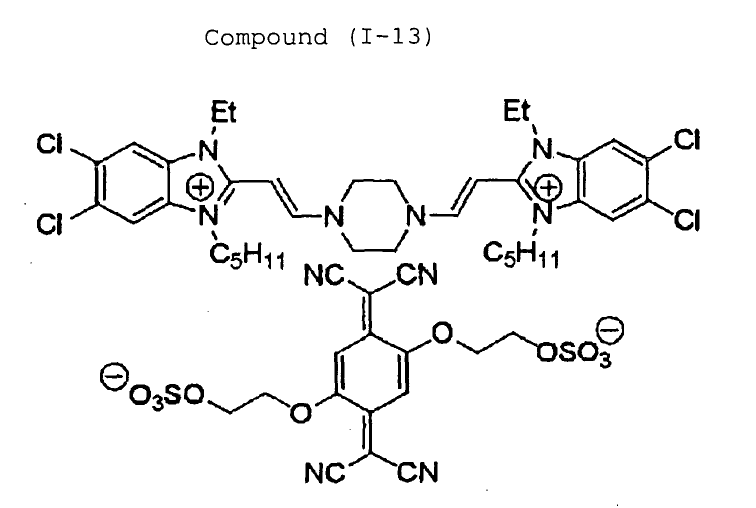

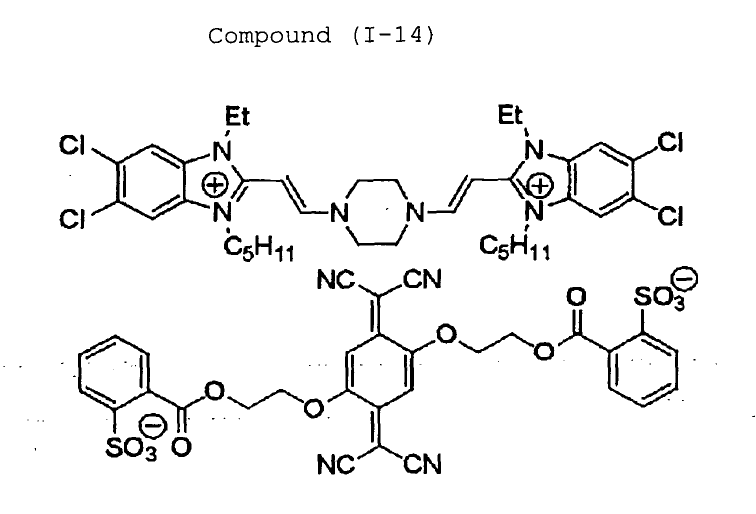

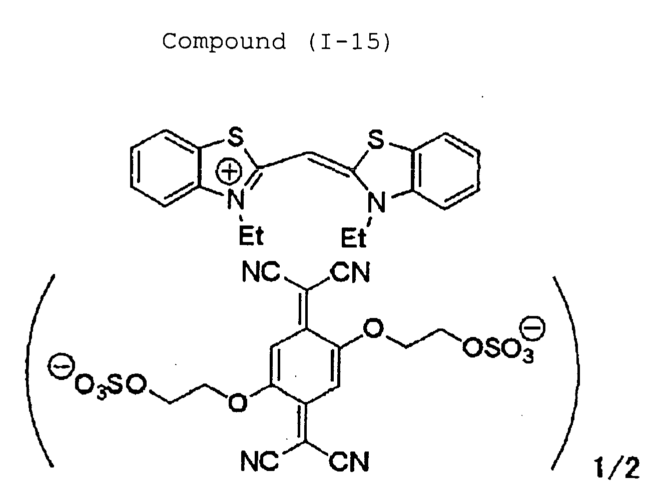

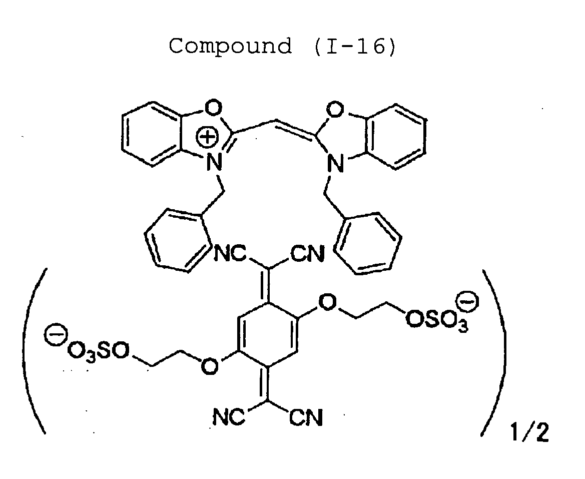

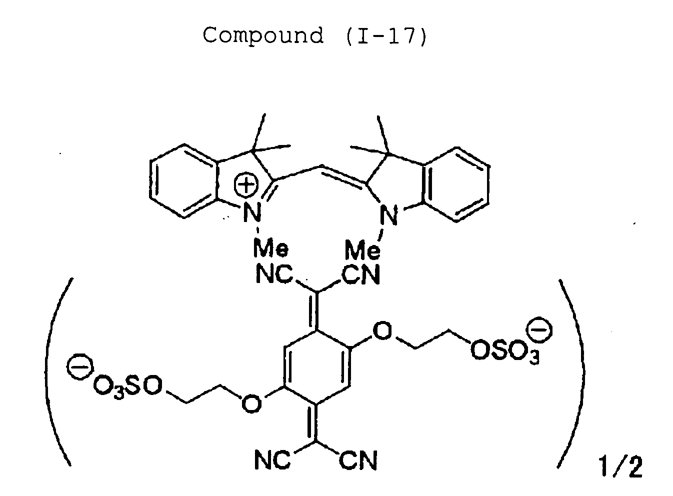

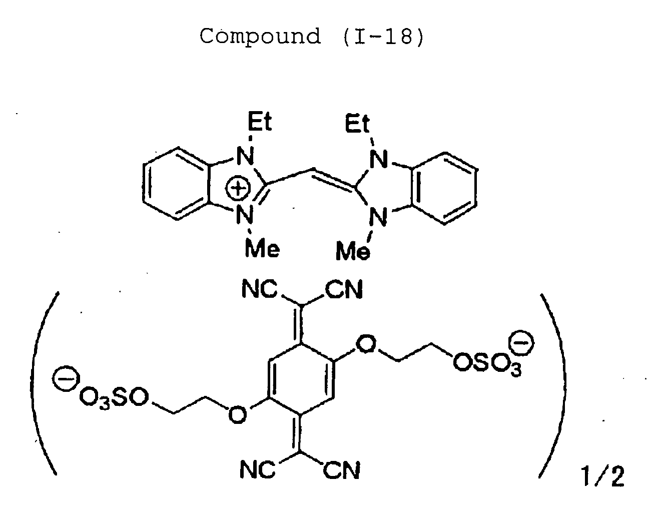

[Ka32]

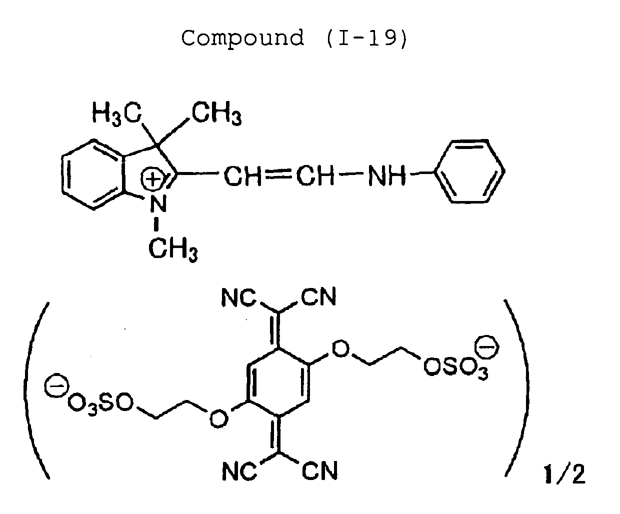

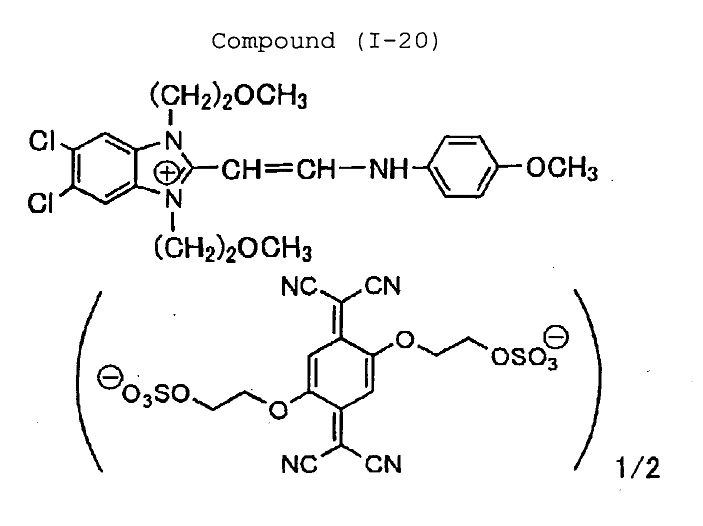

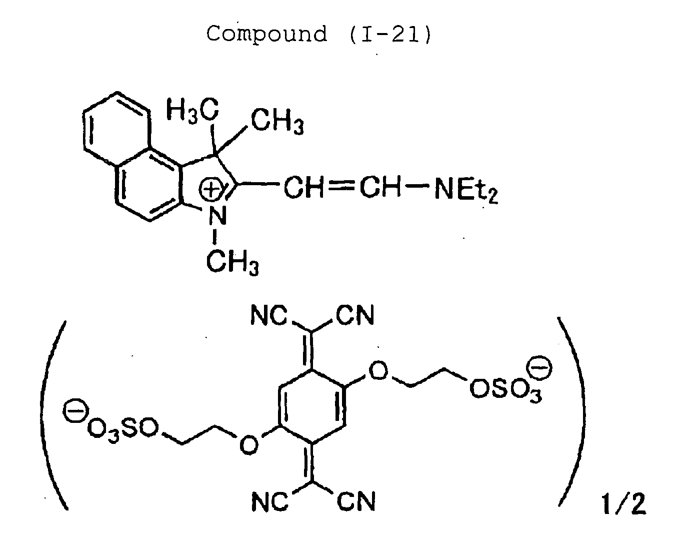

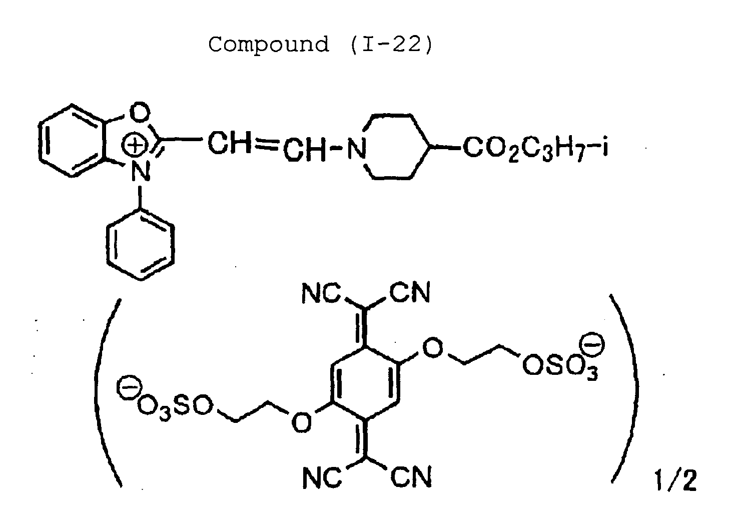

The oxonol dyes represented by the general formula (C-1) are illustrated below in detail.

The general formula (C-I) include a plurality of tautomers which differ in way the localized position of an anion is written. However, when any of A, B, C and D is -CO-E (where E is a substituent) inparticular, negative charge is generallywritten so as to localize on the oxygen atom. In the case where D is -CO-E, for example, the general formula (C-I') is general as the way to write, and it is also included in the general formula (C-I).

[Ka33]

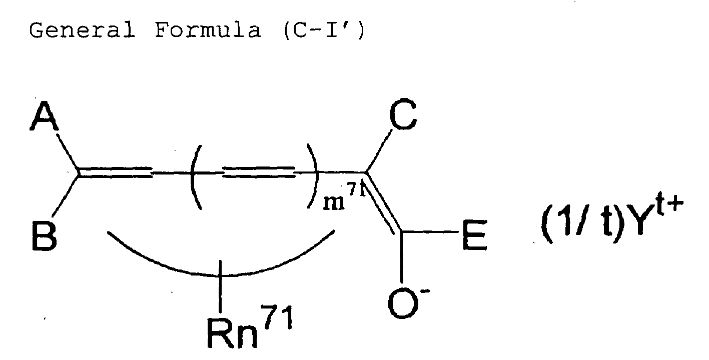

The definitions of A, B, C, R, m⁷¹, n⁷¹ and Y^{t+} are the same as those in the general formula (C-I),-respectively.

The oxonol dyes represented by the general formula (C-I) are explained below. In the general formula (C-I), A, B, C and D represent electron-attracting groups, and A and B, or C and D may combine with each other to form a ring, but when they don't combine with each other, A and B are electron-attracting groups whose Hammett's σp values have a combined total of 0.6 or above, and C and D are also electron-attracting groups whose Hammett's σp values have a combined total of 0.6 or above. R represents a substituent on a methine carbon, m⁷¹ represents an integer of 0 or 1, n⁷¹ represents an integer of 0 to 2m⁷¹+1, when n⁷¹ is an integer of 2 or above, a plurality of Rs may be the same or different or they may combine with each other to form a ring, Y^{t+} represent a t-valent cation, and t represents an integer of 1 to 10. A, B, C and D may be the same as or different from one another.

Hammett's σp values (hereinafter abbreviated as σp values) are listed, e.g., in Chem. Rev., 91, 165 (1991) and the references cited therein. When σp values of electron-attracting groups of interest are not listed in those references, they can be determined in accordance with the method described in the literature cited above. When A and B (C and D) combine with each other to from a ring, the σp value of A (C) means a σp value of the group -A-B-H (-C-D-H), while the σp value of B (D) means a σp value of the group -B-A-H (-D-C-H). In this case, σp values of these groups are different from each other because the groups are different in direction of binding.

Suitable examples of electron-attracting groups represented by A, B, C and D include a cyano group, a nitro group, 1-10C acyl groups (e.g., acetyl, propionyl, butyryl, pivaroyl, benzoyl), 2-12C alkoxycarbonyl groups (e.g., methoxycarbonyl, ethoxycarbonyl, isopropoxycarbonyl, butoxycarbonyl, decyloxycarbonyl), 7-11C aryloxycarbonyl groups (e.g., phenoxycarbonyl), 1-10C carbamoyl groups (e.g., methylcarbamoyl, ethylcarbamoyl, phenylcarbamoyl), 1-10C alkylsulfonyl groups (e.g., methanesulfonyl), 6-10C arylsulfonyl groups (e.g., benzenesulfonyl), 1-10C alkoxysulfonyl groups (e.g., methoxysulfonyl), 1-10C sulfamoyl groups (e.g., ethylsulfamoyl, phenylsulfamoyl), 1-10C alkylsulfinyl groups (e.g., methanesulfinyl,ethanesulfinyl), 6-10C arylsulfinyl groups (e.g., benzenesulfinyl), 1-10C alkylsulfenyl groups (e.g., methanesulfenyl, ethanesulfenyl), 6-10C arylsulfenyl groups (e.g., benzenesulfenyl), halogen atoms, 2-10C alkynyl groups (e.g., ethynyl), 2-10C diacylamino groups (e.g., diacetylamino), a phosphoryl group, a carboxyl group, and 5- or 6-membered heterocyclic groups (e.g., 2-benzothiazolyl, 2-benzoxazolyl, 3-pyridyl, 5-(1H)-tetrazolyl, 4-pyrimidyl).

Examples of a substituent on the methine carbon represented by R in the general formula (C-1) include a 1-20C chain-form or cyclic alkyl group (e.g., methyl, ethyl, n-propyl, isopropyl, n-butyl), a 6-18C substituted or unsubstituted aryl group (e.g., phenyl, chlorophenyl, anisyl, toluyl, 2,4-di-t-amyl-1-naphthyl), an alkenyl group (e.g., vinyl, 2-methylvinyl), an alkynyl group (e.g., ethynyl, 2-methylethynyl, 2-phenylethynyl), a halogen atom (e.g., F, Cl, Br, I), a cyano group, a hydroxyl group, a carboxyl group, an acyl group (e.g., acetyl, benzoyl, salicyloyl, pivaroyl), an alkoxy group (e.g., methoxy, butoxy, cyclohexyloxy), an aryloxy group (e.g., phenoxy, 1-naphthoxy), an alkylthio group (e.g., methylthio, butylthio, benzylthio, 3-methoxypropylthio), an arylthio group (e.g., phenylthio, 4-chlorophenylthio),

an alkylsulfonyl group (e.g., methanesulfonyl, butanesulfonyl), an arylsulfonyl group (e.g., benzenesulfonyl, p-toluenesulfonyl), a 1-10C carbamoyl group, a 1-10C amido group, a 2-12C imido group, a 2-10C acyloxy group, a 2-10C alkoxycarbonyl group, and a heterocyclic group (e.g., an aromatic heterocyclic ring such as pyridyl, thienyl, furyl, thiazolyl, imidazolyl or pyrazolyl, or an aliphatic heterocyclic ring such as a pyrrolidine ring, a piperidine ring, a morpholine ring, a pyran ring, a thiopyran ring, a dioxane ring or a dithiolane ring).

Of the foregoing, a halogen atom, a 1-8C chain-form or cyclic alkyl group, a 6-10C aryl group, a 1-8C alkoxy group, a 6-10C aryloxy group or a 3-10C heterocyclic group is preferred as R, and a chlorine atom, a 1-4C alkyl group (e.g., methyl, ethyl, isopropyl), phenyl, a 1-4C alkoxy group (e.g., methoxy, ethoxy), phenoxy, or a 4-8C nitrogen-containing heterocyclic group (e.g., 4-pyridyl, benzoxazole-2-yl, benzothiazole-2-yl), in particular, is favorable.

n⁷¹ represents an integer of 0 to 2m⁷¹+1. When n⁷¹ is an integer of 2 or above, a plurality of Rs may be the same or different, and they may combine with each other to form a ring. When the ring is formed, the number of its members is preferably 4 to 8, particularly 5 or 6, and the suitable constituent atoms of the ring are carbon, oxygen or nitrogen atoms, particularly carbon atoms. n⁷¹ is preferably 0.

A, B, C, D and R may further have substituents. Examples of such substituents include the same ones as recited above as examples of a univalent substituent represented by R in the general formula (C-1).

From the viewpoint of the thermal decomposability of dyes used in optical discs, it is preferable that A and B, or C and D combine with each other to form a ring. m⁷¹ represents 0 or 1, but it is preferably 0.

Then, the cation represented by Y^{t+} is described in detail. Examples of the cation represented by Y^{t+} include a hydrogen ion, metal ions such as a sodium ion, a potassium ion, a lithium ion, a calcium ion, an iron ion and a copper ion, metal complex ions, ammonium ions, a pyridinium ion, an oxonium ion, a sulfonium ion, a phosphonium ion, a selenonium ion and an iodonium ion. Y^{t+} is preferably a quaternary ammonium ion.

Quaternary ammonium ions can be generally obtained by subjecting tertiary amines (e.g., trimethylamine, triethylamine, tributylamine, triethanolamine, N-methylpyrrolidine, N-methylpiperidine, N,N-dimethylpiperazine, triethylenediamine, N,N,N',N'-tetramethylenediamine) or nitrogen-containing heterocyclic rings (e.g., a pyridine ring, a picoline ring, a 2,2'-bipyridyl ring, a 4,4'-bipyridyl ring, a 1,10-phenanthroline ring, a quinoline ring, an oxazole ring, a thiazole ring, an N-methylimidazole ring, a pyrazine ring, a tetrazole ring) to alkylation (Menshutkin reaction), alkenylation, alkynylation or arylation.

As the quaternary ammonium ion represented by Y^{t+}, a quaternary ammonium ion formed from a nitrogen-containing heterocyclic ring is preferred, and a quaternary pyridinium ion in particular is favorable.

t is an integer of 1 to 10, preferably 1 to 4, particularly preferably 2.

The cation represented by Y^{t+} is far preferably any of the cation parts shown by the general formula (I-2) disclosed in JP-A-2000-052658. Compounds containing these cation parts can be generally prepared with ease by Menshutkin reaction between 2,2'-pyridyl or 4,4'-bipyridyl and halides having the intended substituents (See, e.g., JP-A-61-148162), or by arylation reaction according to the methods disclosed in JP-A-51-16675 and JP-A-1-96171.
Additionally, the cation parts of compounds shown by the general formula (I-2) disclosed in JP-A-2000-052658 fit into the foregoing pyridinium ions (quaternary pyridinium ions).

The general formula (C-II), the general formula (C-III) and the general formula (C-IV) are illustrated. C, D, R, m⁷¹, n⁷¹, Y^{t+} and t have the same meanings as those in the general formula (C-I), respectively, and their preferred ranges are also the same. Y represents either -O-, or -NR¹-, or -CR²R³-. Y is preferably -O- or -CR²R³-, far preferably -O-.

R¹, R², R³, R⁸ and R⁹ each represent a hydrogen atom or a substituent independently. The substituents represented by R¹, R², R³, R⁸ and R⁹ have no particular restriction, and they may be the same substituents as the foregoing R can represent and their preferred ranges are also the same.

Z represents a substituted or unsubstituted alkylene group. Such an alkylene group is preferably a substituted or unsubstituted methylene group, a substituted or unsubstituted ethylene group, or a substituted or unsubstituted propylene group, far preferably a substituted or unsubstituted methylene group or a substituted or unsubstituted ethylene group, further preferably a substituted or unsubstituted methylene group.

x represents 1 or 2, preferably 2.

The general formula (C-V) and the general formula (C-VI) are illustrated. C, D, R, m⁷¹, n⁷¹, Y^{t+} and t have the same meanings as those in the general formula (C-I), respectively, and their preferred ranges are also the same. R⁴ to R⁷ each represent a hydrogen atom or a substituent independently. The substituents represented by R⁴ to R⁷ have no particular restriction, and they may be the same substituents as the foregoing R can represent and their preferred ranges are also the same.

G represents an oxygen atom or a sulfur atom, preferably an oxygen atom.

Examples of oxonol dyes that are used in.the invention and represented by the general formula (C-I) include the examples of the oxonol dyes disclosed in the following patent documents, and some of the compounds disclosed therein are illustrated below.
[Patent Documents] JP-A-63-209995, JP-A-10-297103, JP-A-11-78106, JP-A-11-348420, JP-A-2000-52658, JP-A-2000-272241

[Ka34]

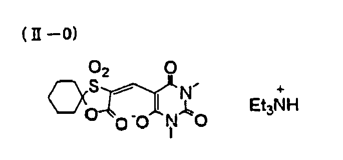

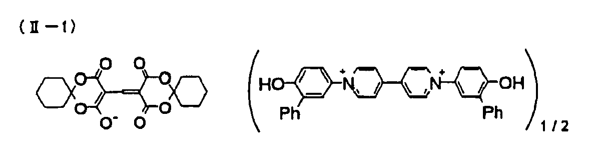

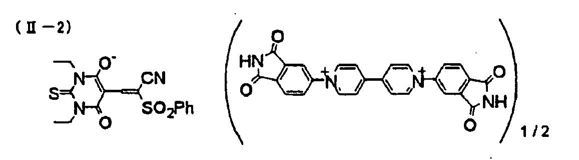

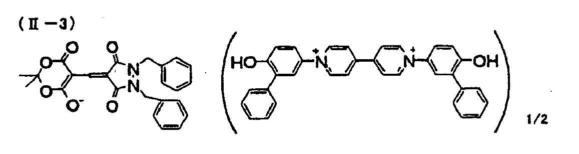

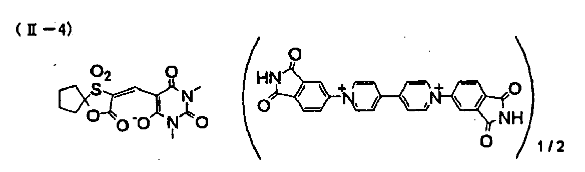

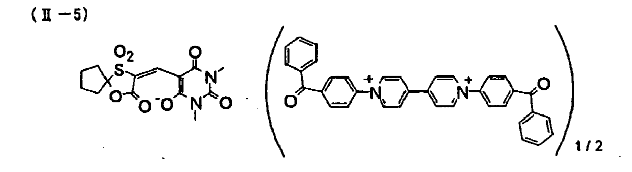

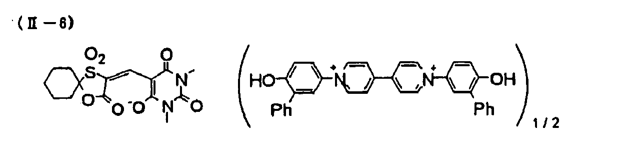

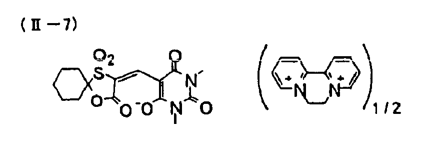

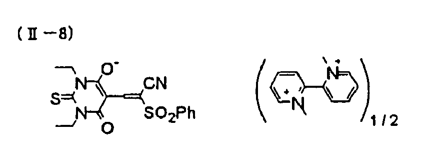

[Ka35]

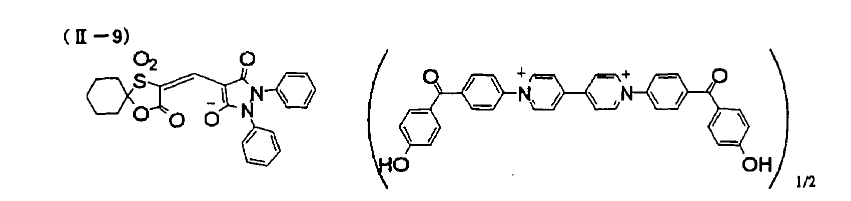

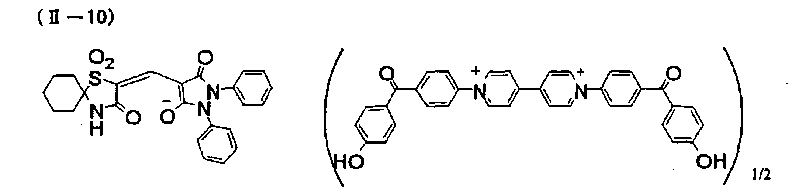

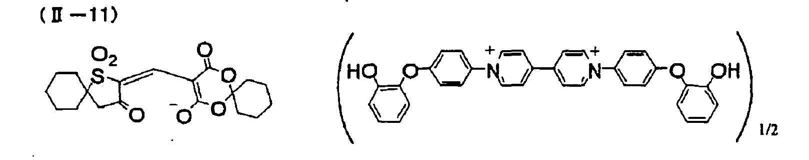

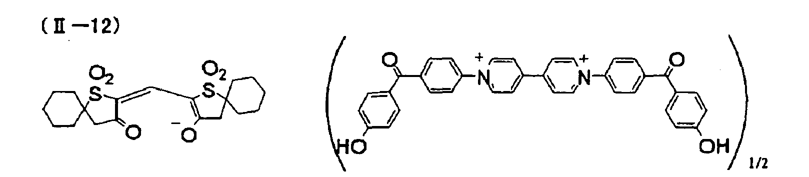

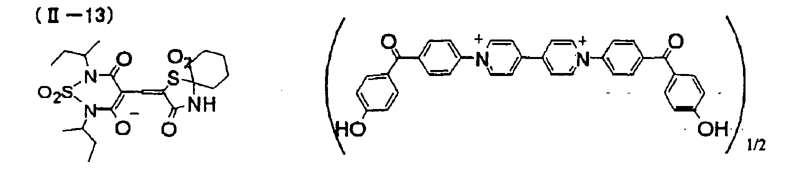

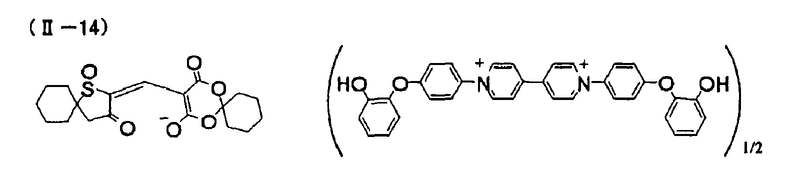

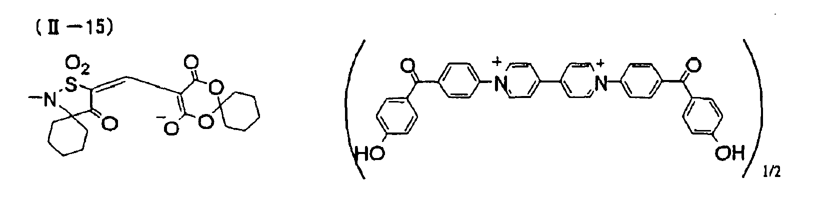

The pyridinium ions are preferably compounds represented by the general formula (D) or the general formula (E).

The general formula (D) and the general formula (E) are explained. The alkyl groups represented by R⁸¹, R⁸², R⁸⁵ and R⁸⁶ are preferably 1-18C substituted orunsubstituted linear, branched or cyclic alkyl groups, far preferably 1-8C substituted or unsubstituted linear, branched or cyclic alkyl groups, with examples including methyl, ethyl, n-propyl, isopropyl, n-butyl, isobutyl, n-hexyl, cyclohexyl and cyclopropyl. Examples of substituents such alkyl groups may have include halogen atoms (e.g., F, Cl, -Br), 1-18C, preferably 1-8C, alkoxy groups (e.g., methoxy, ethoxy), 6-10C aryloxy groups (e.g., phenoxy, p-methoxyphenoxy), 1-18C, preferably 1-8C, alkylthio groups (e.g., methylthio, ethylthio), 6-10C arylthio groups (e.g., phenylthio), 2-18C, preferably 2-8C, acyl groups (e.g., acetyl, propionyl), 2-18C, preferably 2-8C, acyloxy groups (e.g., acetoxy, propionyloxy), 2-18C, preferably 2-8C, alkoxycarbonyl groups (e.g., methoxycarbonyl, ethoxycarbonyl), 2-18C, preferably 2-8C, alkenyl groups (e.g., vinyl), 2-18C, preferably2-8C, alkynyl groups (e.g., ethynyl), 6-10C aryl groups (e.g., phenyl, naphthyl), 7-11C aryloxycarbonyl groups (e.g., naphthoxycarbonyl), 0-18C, preferably 0-8C, amino groups (e.g., amino, methylamino, dimethylamino, diethylamino, anilino, methoxyphyenylamino, chlorophenylamino, morpholino, piperidino, pyrrolidino, pyridylamino, methoxycarbonylamino, n-butoxycarbonylamino, phenoxycarbonylamino, methylcarbamoylamino, phenylcarbamoylamino, acetylamino, ethylcarbonylamino, cyclohexylcarbonylamino, benzoylamino, chloroacetylamino, methylsulfonylamino), 1-18C, preferably 1-8C, carbamoyl groups (e.g., unsubstituted carbamoyl, methylcarbamoyl, ethylcarbamoyl, n-butylcarbamoyl, t-butylcarbamoyl, dimethylcarbamoyl, morpholinocarbamoyl, pyrrolidinocarbamoyl), 0-18C, preferably 0-8C, sulfamoyl groups (e.g., unsubstituted sulfamoyl, methylsulfamoyl, phenylsulfamoyl), a cyano group, a nitro group, a carboxyl group, a hydroxyl group, and heterocyclic groups (e.g., oxazole, benzoxazole, thiazole, benzothiazole, imidazole, benzimidazole,indolenine,pyridine, sulfolane,furan, thiophene, pyrazole, pyrrole, chroman and coumarin).

The alkenyl groups represented by R⁸¹, R⁸², R⁸⁵ and R⁸⁶ are preferably 2-18C, especially 2-8C, substituted or unsubstituted linear, branched or cyclic alkenyl groups, with examples including vinyl, allyl, isopropenyl, 1-propenyl, 1,3-butadienyl and cyclohexenyl. Substituents these alkenyl groups may have are identical with those recited above as the substituents the alkyl groups may have, except for the alkenyl groups.

The alkynyl groups represented by R⁸¹, R⁸², R⁸⁵ and R⁸⁶ are preferably 2-18C, especially 2-8C, substituted or unsubstituted linear, branched or cyclic alkynyl groups, such as ethynyl and 2-propynyl. Substituents these alkynyl groups may have are identical with those recited above as the substituents the alkyl groups may have, except for the alkynyl groups.

The aryl groups represented by R⁸¹, R⁸², R⁸⁵ and R⁸⁶ are preferably 6-18C, especially 6-10C, substituted or unsubstituted aryl groups, such as phenyl and naphthyl. Substituents these aryl groups may have are identical with those recited above as the substituents the alkyl groups may have, and further include alkyl groups (e.g., methyl, ethyl).

R⁸¹ and R⁸² may combine with each other to form a ring. When the ring is formed, it is preferable that carbon atoms, or carbon and nitrogen atoms, or nitrogen atoms present in R⁸¹ and R⁸², respectively, are bound together. And the binding between carbon atoms is far preferred, and the binding between methylene groups in particular is preferred. -

It is preferable that R⁸⁵ and R⁸⁶ combine with each other to form a ring. The ring formed is preferably a 5-, 6- or 7-membered ring, far preferably a 6-membered ring. Although the ring may be formed by combining carbon atoms, or carbon and nitrogen atoms, or nitrogen atoms present in R⁸⁵ and R⁸⁶, respectively, it is preferable that carbon atoms present in R⁸⁵ and R⁸⁶, respectively, are bound together to form a ring. And the ring formed by combining methylene groups is far preferred.

Examples of substituents represented by R⁸³ and R⁸⁴ include 1-18C, preferably 1-8C, substituted or unsubstituted linear, branched or cyclic alkyl groups (e.g., methyl, ethyl, propyl, isopropyl, n-butyl, isobutyl, sec-butyl, t-butyl, cyclohexyl, methoxyethyl, ethoxycarbonylethyl, cyanoethyl, diethylaminoethyl, hydroxyethyl, chloroethyl, acetoxyethyl), 7-18C, preferably 7-12C, substituted or unsubstituted aralkyl groups (e.g., benzyl, carboxybenzyl), 2-18C, preferably 2-8C, alkenyl groups (e.g., vinyl), 2-18C, preferably 2-8C, alkynyl groups (e.g., ethynyl), 6-18C, preferably 6-10C, substituted or unsubstituted aryl groups (e.g., phenyl, 4-methylphenyl, 4-methoxyphenyl, 4-carboxyphenyl, 3,5-dicarboxyphenyl), 2-18C, preferably 2-8C, substituted or unsubstituted acyl groups (e.g., acetyl, propionyl, butanoyl, chloroacetyl), 1-18C, preferably 1-8C, substituted or unsubstituted sulfonyl groups (e.g., methanesulfonyl, p-toluenesulfonyl), 2-18C, preferably 2-8C, alkoxycarbonyl groups (e.g., methoxycarbonyl, ethoxycarbonyl), 7-18C, preferably 7-12C, aryloxycarbonyl groups (e.g., phenoxycarbonyl, 4-methylphenoxycarbonyl, 4-methoxyphenylcarbonyl), 1-18C, preferably 1-8C, substituted or unsubstituted alkoxy groups (e.g., methoxy, ethoxy, n-butoxy, methoxyethoxy), 6-18C, preferably 6-10C, substituted or unsubstituted aryloxy groups (e.g., phenoxy, 4-methoxyphenoxy), 2-18C, preferably 2-8C, substituted or unsubstituted acyloxy groups (e.g., acetoxy, ethylcarbonyloxy, cyclohexylcarbonyloxy, benzoyloxy, chloroacetyloxy), 1-18C, preferably 1-8C, substituted or unsubstituted sulfonyloxy group (e.g., methanesulfonyloxy), 2-18C, preferably 2-8C, carbamoyloxy groups (e.g., methylcarbamoyloxy, diethylcarbamoyloxy), 0-18C, preferably0-8C, substituted or unsubstituted amino groups (e.g., unsubstituted amino group, methylamino, dimethylamino, diethylamino, anilino, methoxyphenylamino, chlorophenylamino, morpholino, piperidino, pyrrolidino, pyridylamino, methoxycarbonylamino, n-butoxycarbonylamino, phenoxycarbonylamino, methylcarbamoylamino, phenylcarbamoylamino, ethylthiocarbamoylamino, methylsulfamoylamino, phenylsulfamoylamino, acetylamino, ethylcarbonylamino, ethylthiocarbonylamino, cyclohexylcarbonylamino, benzoylamino, chloroacetylamino, methylsulfonylamino, benzenesulfonylamino), 1-18C, preferably 1-8C, substituted or unsubstituted carbamoyl groups (e.g., unsubstituted carbamoyl, methylcarbamoyl, ethylcarbamoyl, n-butylcarbamoyl, t-butylcarbamoyl, dimethylcarbamoyl, morpholinocarbamoyl, pyrrolidinocarbamoyl), 0-18C, preferably 0-8C, substituted or unsubstituted sulfamoyl groups (e.g., unsubstituted sulfamoyl, methylsulfamoyl, phenylsulfamoyl), halogen atoms (e.g., fluorine, chlorine, bromine), a hydroxyl group, a nitro group, a cyano group, a carboxyl group and heterocyclic groups.

The substituents represented by R⁸³ and R⁸⁴ are preferably hydrogen atoms or alkyl groups. And it is especially preferred that both R⁸³ and R⁸⁴ are hydrogen atoms.

R⁸³ and R⁸⁴ may combine with each other to form a carbocyclic ring or heterocyclic ring. The ring formed from them is preferably a carbocyclic ring, far preferably a fused aromatic ring formed by being fused together with the pyridine rings to which they are attached.

Examples of quaternary ammonium salts represented by the foregoing general formulae (D) and (E) include the compounds disclosed in JP-A-10-109475, JP-A-10-297103 and JP-A-2001-63211, but they are not limited to these compounds.

### <Optical Information Recording Medium>

The present optical information recording medium is preferably an optical information recording medium in a mode [1] that a dye-containing write-once recording layer and a 0.01 to 0.5mm-thick cover layer are provided on a 0. 7 to 2 mm-thick substrate in order of mention, or an optical information recording medium in a mode [2] that a dye-containing write-once recording layer and a 0.1 to 1.0 mm-thick protective substrate are provided on a 0.1 to 1.0 mm-thick substrate in order of mention. In the mode [1], it is preferable that a pregroove formed on the substrate has a track pitch of 200 to 500 nm, a groove width of 25 to 250 nm and a groove depth of 5 to 150 nm, and a wobbling amplitude of the pregroove is preferably from 10 to 50 nm, far preferably from 11 to 40 nm, further preferably from 10 to 50 nm. In the mode [2], it is preferable that a pregroove formed on the substrate has a track pitch of 200 to 600 nm, a groove width of 50 to 300 nm and a groove depth of 30 to 200 nm, and a wobbling amplitude of the pregroove is preferably from 10 to 50 nm, far preferably from 11 to 40 nm, further preferably from 10 to 50 nm.
The optical information recording medium in the mode [1] has at least a substrate, a write-once recording layer and a cover layer. To begin with, these essential members are described step by step.

### [Substrate in Mode [1]]

The substrate in a preferred mode [1] requires formation of a pregroove (a guiding groove) having geometries that its track pitch, groove width (half width), groove depth and wobbling amplitude are within the ranges defined below, respectively. This pregroove is formed in order to achieve higher recording-density than those of CD-R and DVD-R, and suitable, e.g., for-using the present optical information recording medium as a medium responsive to violet laser.

The track pitch of the pregroove is required to be in the range of 200 to 500 nm, and the upper limit thereof is preferably 420 nm or below, far preferably 370 nm or below, further preferably 330 nm or below. And the lower limit thereof is preferably 210 nm or above, far preferably 260 nm or above.
When the trackpitch is below 200 nm, exact pregroove formation becomes difficult and a crosstalk trouble occurs in some cases. When the track pitch is beyond 500 nm, on the other hand, a problem of lowering the recording density is caused in some cases.

The groove width (half width) of the pregroove is required to be in the range of 25 to 250 nm, and the upper limit thereof is preferably 200 nm or below, far preferably 170 nm or below, further preferably 150 nm or below. And the lower limit thereof is preferably 50 nm or above, far preferably 80 nm or above, further preferably 100 nm or above.
When the groove width of the pregroove is below 25 nm, insufficient groove transfer at the time of molding and increase in error rate at the time of recording occur in some cases. When the groove width of the pregroove is beyond 250 nm, on the other hand, there may be cases where pits formed at the time of recording are broadened to result in crosstalk and insufficient modulation degree.

The groove depth of the pregroove is required to be in the range of 5 to 150 nm, and the upper limit thereof is preferably 100 nm or below, far preferably 70 nm or below, further preferably 50 nm or below. And the lower limit thereof is preferably 10 nm or above, far preferably 20 nm or above, further preferably 28 nm or above. When the groove depth of the pregroove is below 5 nm, a sufficient degree of recording modulation cannot be achieved in some cases; while, when the groove depth of the pregroove is beyond 150 nm, a big drop in reflectivity occurs in some cases.

In addition, the upper limit on a groove tilt angle of the pregroove is preferably 80° or below, far preferably 75° or below, particularly preferably to 70° or below. And the lower limit on a groove tilt angle of the pregroove is preferably 20° or above, far preferably to 30° or above, further preferably to 40° or above.
When the groove tilt angle of the pregroove is below 20°, the tracking error signals obtained are sometimes insufficient in amplitude; while, when the groove tilt angle is beyond 80°, the pregroove is difficult to mold.

The substrate for use in the invention can be arbitrarily chosen from various materials hitherto used as substrate materials of optical information recording media.
Examples of such a substrate material include glass; acrylic resins, such as polycarbonate and polymethyl methacrylate;- vinyl chloride resins, such as polyvinyl chloride and vinyl chloride copolymers; epoxy resin; amorphous polyolefin; polyester; and metals, such as aluminum. These materials may be used in combination of two or more thereof, if desired.
Of those materials, thermoplastic resins, such as amorphous polyolefin and polycarbonate, especially polycarbonate, are preferred over the others from the viewpoints of moisture resistance, dimensional stability and inexpensiveness.
When these resins are used, the substrates can be made using injection molding.
The thickness of the substrate is required to be in the range of 0.7 to 2 mm. And the thickness range is preferably from 0.9 to 1.6 mm, far preferably from 1.0 to 1.3 mm.

Additionally, it is appropriate for improving flatness and enhancing adhesiveness that an undercoat layer be formed on the side of the substrate where a light reflection layer as described hereinafter is to be provided.
Examples of a material for the undercoat layer include polymeric materials, such as polymethyl methacrylate, acrylic acid-methacrylic acid copolymer, styrene-maleic anhydride copolymer, polyvinyl alcohol, N-methylolacrylamide, styrene-vinyltoluene copolymer, chlorosulfonated polyethylene, nitrocellulose, polyvinyl chloride, chlorinated polyolefin, polyester, polyimide, vinyl acetate-vinyl chloride copolymer, ethylene-vinyl acetate copolymer, polyethylene, polypropylene and polycarbonate; and surface modifiers, such as silane coupling agents.
The undercoat layer can be formed by preparing a coating solution by dissolving or dispersing a material as recited above into an appropriate solvent, and then applying the coating solution to a substrate surface in accordance with a coating method, such as spin coating, dip coating or extrusion coating. The thickness of the undercoat layer is generally from 0.005 to 20 µm, preferably from 0.01 to 10 µm.

### [Write-Once Recording Layer in Mode [1]]

The write-once recording layer in a preferred mode [1] is formed by preparing a coating solution by dissolving a dye, together with a binder and so on, into an appropriate solvent, applying a coat of this coating solution to a substrate or a light reflection layer described hereinafter, and then drying the coat. Herein, the write-once recording layer may have a single-layer or multilayer structure. In the case of a multilayer structure, the process of applying a coating solution is repeated a plural times.
The dye concentration in a coating solution is generally from 0.01 to 15 % by mass, preferably from 0.1 to 10 % by mass, far preferably from 0.5 to 5 % by mass, particularly preferably from 0.5 to 3 % by mass.

Examples of a solvent usable for preparing the coating solution include esters, such as butyl acetate, ethyl lactate and cellosolve acetate; ketones, such as methyl ethyl ketone, cyclohexanone and methylisobutylketone; chlorinatedhydrocarbons, such as dichloromethane, 1,2-dichloroethane and chloroform; amides, such as dimethylformamide; hydrocarbons, such as methylcyclohexane; ethers, such as tetrahydrofuran, ethyl ether and dioxane; alcohol, such as ethanol, n-propanol, isopropanol, n-butanol and diacetone alcohol; fluorine-containing solvents, such as 2,2, 3, 3-tetrafluoropropanol; and glycol ethers, such as ethylene glycol monomethyl ether, ethylene glycol monoethyl ether and propylene glycol monomethyl ether.
The solvents as recited above can be used alone or as a mixture of two or more thereof in consideration of the solubility of a dye used. To the coating solution, various additives including an antioxidant, a UV absorber, a plasticizer and a lubricant may further be added according to the intended purposes.

Examples of a coating method applicable therein include a spray method, a spin coating method, a dip method, a roll coating method, a blade coating method, a doctor roll method and a screen printing method.
At the time of coating, the temperature of the coating solution is preferably from 23°C to 50°C, far preferably from 24°C to 40°C, and what is particularly preferable is the temperature range of 23°C to 50°C.

The thickness of the thus formed write-once recording layer, as measured on the groove (the convex part of the substrate), is preferably 300 nm or below, far preferably 250 nm or below, further preferably 200 nm or below, particularly preferably 180 nm or below. The lower limit of the thickness is preferably 30 nm or above, far preferably 50 nm or above, further preferably 70 nm or above, particularly preferably 90 nm or above.
In addition, the thickness of the write-once recording layer on the land (the concave part of the substrate) is preferably 400 nm or below, far preferably 300 nm or below, further preferably 250 nm or below. The lower limit of the thickness is preferably 70 nm or above, far preferably 90 nm or above, further preferably 110 nm or above.
Moreover, the ratio of the write-once recording layer thickness on the groove to the write-once recording layer thickness on the land is preferably 0.4 or above, far preferably 0. 5 or above, further preferably 0.6 or above, particularly preferably 0.7 or above. The upper limit of the ratio is preferably smaller than 1, far preferably 0.9 or below, further preferably 0.85 or below, particularly preferably 0.8 or below.

When the coating solution contains a binder, natural organic polymeric materials including gelatin, cellulose derivatives, dextran, rosin and rubber, and synthetic organic polymeric materials including hydrocarbon resins, such as polyethylene, polypropylene, polystyrene and polyisobutylene, vinyl resins, such as polyvinyl chloride, polyvinylidene chloride and vinyl chloride-vinyl acetate copolymer, acrylic resins, such as polymethyl acrylate and polymethyl methacrylate, and initial condensates of thermosetting resins, such as polyvinyl alcohol, chlorinated polyethylene, epoxy resin, butyral resin, rubber derivatives and initial condensates of thermosetting resins, such as phenol-formaldehyde resin, can be recited as examples of the binder contained therein. When a binder is also used as an ingredient in the write-once recording layer, the amount of the binder used is generally 0.01 to 50 (by mass) times, preferably 0.1 to 5 (by mass) times, larger than the amount of the dye used.

Into the write-once recording layer, various discoloration inhibitors can be incorporated for the purpose of enhancing light resistance of the write-once recording layer. As the discoloration inhibitors, singlet-oxygen quenchers are generally used. In the invention also, it is expected that the addition of a singlet-oxygen quencher can provide a further improvement in light stability. The singlet-oxygen quenchers as described in publications such as laid-open patent specifications can be utilized.
Examples of singlet-oxygen quenchers utilizable herein include those disclosed in JP-A-58-175693, JP-A-59-81194, JP-A-60-18387, JP-A-60-19586, JP-A-60-19587, JP-A-60-35054, JP-A-60-36190, JP-A-60-36191, JP-a-60-44554, JP-A-60-44555, JP-A-60-44389, JP-A-60-44390, JP-A-60-54892, JP-A-60-47069, JP-A-63-209995, JP-A-4-25492, JP-B-1-38680, JP-B-6-26028, German Patent No. 350399, and Nippon Kagakukai-Shi, page 1141, the Oct; issue (1992).
The discoloration inhibitors such as the foregoing singlet-oxygen quenchers are used in an amount of generally 0.1 to 50 % by mass, preferably 0.5 to 45 % by mass, far preferably 3 to 40 % by mass, particularly preferably 5 to 25 % by mass, of the amount of dye used.

### [Cover Layer in Mode [1]]

The cover layer in a preferred mode [1] is laminated on the foregoing write-once recording layer or a barrier layer mentioned hereinafter via an adhesive or a pressure-sensitive adhesive.
The cover layer used in the invention has no particular restriction so far as it is a film of transparent material, but it is preferable to use an acrylic resin, such as polycarbonate or polymethyl methacrylate; a vinyl chloride resin, such as polyvinyl chloride or a vinyl chloride copolymer; an epoxy resin; amorphous polyolefin; cellulose triacetate; or the like. Of these materials, polycarbonate and cellulose triacetate are preferred over the others.
Incidentally, the term "transparent" as used herein means that, when light for recording or playback use is incident on a material, the material has a transmittance of at least 80%.

In addition, the cover layer may contain various additives as far as they are not detrimental to effects of the invention. For instance, dyes for-interception of light with wavelengths of 500 nm or longer may be present therein.
With respect to the surface roughness as a surface property of the cover layer, it is preferable that both two-dimensional and three-dimensional roughness parameters are 5 nm or below.
From the viewpoint of the power of collecting light for recording and playback use, it is also preferable that the birefringence of the cover layer is 10 nm or below.

The thickness of the cover layer is determined as appropriate to the wavelength and NA of laser light applied for recording and playback. Specifically, the thickness of the cover layer used in the invention is within the range of 0.01 to 0.5 mm, preferably from 0.05 to 0.12 mm.
Further, it is preferable that the thickness of the cover layer and that of the layer formed from an adhesive or a pressure-sensitive adhesive total from 0.09 to 0.11 mm, especially from 0.095 to 0.105 mm.
Moreover, a protective layer (a hard coating layer) may be provided on the incidence side of the cover layer with the intention of preventing the surface on which the light is incident from bruising during manufacturing the optical information recording medium.

Suitable examples of an adhesive with which the cover layer can be bonded include UV-curable resins, EB-curable resins and thermosetting resins. Of these resins, UV-curable resins in particular are used to advantage.
When the adhesive used is a UV-curable resin, the UV-curable resin may be fed from a dispenser to the barrier layer surface as it is or in a state of the solution prepared by dissolving it in an appropriate solvent, such as methyl ethyl ketone or ethyl acetate. For the purpose of preventing warpage of the optical information recording medium manufactured, it is appropriate that the UV-curable resin constituting the adhesive layer be small in curing shrinkage. As an example of such a UV-curable resin, "SD-640"manufactured by Dainippon Ink and Chemicals, Incorporated can be cited.

It is preferable that such an adhesive in a specified amount is applied to the surface of, e.g., a barrier layer to be bonded to a cover layer, the cover layer is set thereon, and the adhesive is uniformly spread out between the surface to be bonded and the cover layer by use of spin coating, and thereafter cured.
The thickness of the adhesive layer formed in the foregoing manner is preferably from 0.1 to 100 µm, far preferably from 0.5 to 50 µm, further preferably 10 to 30 µm.

On the other hand, pressure-sensitive adhesives usable for bonding the cover layer include those of acrylic type, rubber type and silicone type. Of these types, pressure-sensitive adhesives of acrylic type are preferred over the others in terms of transparency and durability. Substances suitable as the pressure-sensitive adhesives of acrylic type are products obtained by copolymerizing a main monomer, such as 2-ethylhexyl acrylate or n-butyl acrylate, short-chain alkyl acrylates and methacrylates for enhancement of cohesion, such as methyl acrylate, ethyl acrylate and methyl methacrylate, and monomers capable of forming cross-linking sites for a cross-linking agent, such as acrylic acid, methacrylic acid, acrylamide derivatives, maleic acid, hydroxylethyl acrylate and glycidyl acrylate. By appropriately controlling the mixing ratio of the main monomer to short-chain monomers and monomers for providing cross-linking sites and by properly selecting the species of those monomers, the glass transition temperature (Tg) of the product obtained and the density of cross-links formed therein can be adjusted.

Cross-linking agentsusablein combination with the foregoing pressure-sensitive adhesives are, e.g., cross-linking agents of isocyanate type. Examples of such isocyanate-type cross-linking agents include isocyanates, such as tolylene diisocyanate, 4,4'-diphenylmethane diisocyanate, hexamethylene diisocyanate, xylylene diisocyanate, naphthylene-1,5-diisocyanate, o-toluidine isocyanate, isophorone diisocyanate and triphenylmethane triisocyanate; products of these isocyanates and polyhydric alcohol; and polyisocyanates produced by condensation of those isocyanates.
Examples of commercially-available products of those isocyanates include Coronate L, Coronate HL, Coronate 2030,-Coronate 2031, Millionate MR and Millionate HTL, which are products of Nippon Polyurethane Industry Co., Ltd.; Takenate D-102, Takenate D-110N, Takenate D-200 and Takenate D-202, which are products of Takeda Pharmaceutical Company Limited; and Desmodule L, Desmodule IL, Desmodule N and Desmodule HL, which are products of Sumitomo Bayer Urethane Co., Ltd.

Such a pressure-sensitive adhesive may be uniformly applied in a specified amount to the surface of a barrier layer to be bonded, the cover layer is set on the adhesive applied, and then the adhesive is cured, or a coating is formed in advance by uniformly applying a specified amount of the pressure-sensitive adhesive to one side of a cover layer, this coating and the surface to be bonded are bonded together and then cured.
Alternatively, a commercial pressure-sensitive adhesive film provided in advance with a pressure-sensitive adhesive layer may be used as the cover layer.
The thickness of a pressure-sensitive adhesive layer formed from the pressure-sensitive adhesive as mentioned above is preferably from 0.1 to 100 µm, far preferably from 0.5 to 50 µm, farther preferably from 10 to 30 µm.

### [Other Layers in Mode [1]]

In addition to the required layers, the optical information recording medium in a preferred mode [1] may have any other layers as far as they are not detrimental to effects of the invention. Examples of such other layers include a label layer with a desired picture, which is provided on the back of the substrate (the side opposite to the write-once recording layer forming side), a light reflection layer (described hereinafter) provided between the substrate and the write-once recording layer, a barrier layer (described hereinafter) provided between the write-once recording layer and the cover layer, and an interface layer provided between the light reflection layer and the write-once recording layer. Herein, the label layer is formed with a UV-curable resin, a thermosetting resin, a heat-dryable resin or the like.
Additionally, each of those required and arbitrary layers may be a single layer, or may have a multilayered structure.

### [Light Reflection Layer in Mode [1]]

In a preferred mode [1], it is preferable that the optical information recording medium has a light reflection layer between the substrate and the write-once recording layer for the purpose of enhancing laser light reflectivity and imparting the function of improving record/playback characteristics.
The light reflection layer can be formed on the substrate by vacuum deposition, sputtering or ion-plating of a photoreflective material having a high laser light reflectivity.
The thickness of the light reflection layer is generally from 10 to 300 nm, preferably from 50 to 200 nm.
Additionally, the laser light reflectivity is-preferably 70% or above.

Examples of a photoreflective material having a high reflectivity include metals and semimetals, such as Mg, Se, Y, Ti, Zr, Hf, V, Nb, Ta, Cr, Mo, W, Mn, Re, Fe, Co, Ni, Ru, Rh, Pd, Ir, Pt, Cu, Ag, Au, Zn, Cd, Al, Ga, In, Si, Ge, Te, Pb, Po, Sn and Bi; and stainless steel. These photoreflective materials may be used alone, or as combinations of two or more thereof, or as alloys. Of these materials, Cr, Ni, Pt, Cu, Ag, Au, Al and stainless steel are preferred over the others. Among these metals, Au, Ag, Al and their alloys in particular are used to advantage. And Au, Ag and alloys thereof are the best materials.

### [Process of Forming Barrier Layer (Interlayer) in Mode [1]]

In a preferred mode [1] of optical information recording medium, it is preferable to form a barrier layer between the write-once recording layer and the cover layer.
The barrier layer is provided for the purposes of enhancing the keeping quality of the write-once recording layer, improving the adhesion of the write-once recording layer to the cover layer, and making adjustments to reflectivity and thermal conductivity.
Materials usable for the barrier layer have no particular restrictions so far as they are pervious to the light used for recording and playback and can perform the foregoing functions. In general, however, materials low in perviousness to gasses and moisture, and dielectric besides, are preferable.
Suitable examples of such a material include nitrides, oxides, carbides and sulfides of Zn, Si, Ti, Te, Sn, Mo and Ge. Of these materials, ZnS, MoO₂ GeO₂, TeO, SiO₂, TiO₂ ZnO, ZnS-SiO₂, SnO₂ and ZnO-Ga₂O₃ are preferable, and ZnS-SiO₂, SnO₂ and ZnO-Ga₂O₃ are far preferable.

The barrier layer can be formed using vacuum film-forming methods, such as vacuum evaporation, DC sputtering, RF sputtering and ion-plating. Of these methods, sputtering methods, especially RF sputtering, are preferred over the others.
The thickness of the barrier layer in the invention is preferably from 1 to 200 nm, far preferably from 2 to 100 nm, farther preferably from 3 to 50 nm.

In the next place, an optical information recording medium in a preferred mode [2] is described.
The optical information recording medium in the mode [2] is an optical information recording medium having a layer structure of lamination type. Typical examples of such a layer structure are as follows:
(1) The first layer structure is a structure that a write-once recording layer, a light reflection layer and an adhesive layer are formed on a substrate in their order of mention and, on the adhesive layer, a protective substrate is provided.
(2) The second layer structure is a structure that a write-once recording layer, a light reflection layer, a protective layer and an adhesive layer are formed on a substrate in their order of mention and, on the adhesive layer, a protective substrate is provided.
(3) The third layer structure is a structure that a write-once recording layer, a light reflection layer, a protective layer, an adhesive layer and a protective layer are formed on a substrate in their order of mention and, on the latter protective layer, a protective substrate is provided.
(4) The fourth layer structure is a structure that a write-once recording layer, a light reflection layer, a protective layer, an adhesive layer, a protective layer and a light reflection layer are formed on a substrate in their order of mention and, on the latter light reflection layer, a protective substrate is provided.
(5) The fifth layer structure is a structure that a write-once recording layer, a light reflection layer, an adhesive layer and a light reflection layer are formed on a substrate in their order of mention and, on the latter light reflection layer, a protective substrate is provided.
Additionally, the layer structures (1) to (5) are mere examples, so the arranging orders of their constituent layers may be partly interchanged, or their constituent layers may be partly omitted. Further, a write-once recording layer may also be formed on the protective substrate side. This case can offer an optical information recording medium ofdouble-sided,record/playbacktype. Furthermore, each constituent layer may have a single-layer form, or a plural-layer form.
The present optical information recording medium is illustrated below in detail taking as an example the case where the medium has a structure that a substrate, a write-once recording layer, a light reflection layer, an adhesive layer and a protective substrate are arranged in the order of mention.

### [Substrate in Mode [2]]

On the substrate in a preferred mode [2], it is required to form a pregroove (a guiding groove) having geometries that its track pitch, groove width (half width), groove depth and wobbling amplitude are within the ranges defined hereinafter, respectively. This pregroove is formed in order to achieve higher recording density than those in CD-R and DVD-R, and can impart suitability for use as violet laser-responsive medium to the present optical information recording medium.

The track pitch of the pregroove is required to be in the range of 200 to 500 nm, and the upper limit thereof is preferably 450 nm or below, far preferably 430 nm or below. On the other hand, the lower limit thereof is preferably 300 nm or above, far preferably 330 nm or above, further preferably 370 nm or above.
When the track pitch is below 200 nm, precise formation of pregroove becomes difficult, and besides, a crosstalk trouble occurs in some cases. When the track pitch is beyond 500 nm, on the other hand, a problem of lowering the recording density is caused in some cases.

The groove width (half width) of the pregroove is required to be in the range of 50 to 300 nm, and the upper limit thereof is preferably 250 nm or below, far preferably 200 nm or below, further preferably 180 nm or below. And the lower limit thereof is preferably 100 nm or above, far preferably 120 nm or above, further preferably 140 nm or above. When the groove width of the pregroove is below 50 nm, there may be cases where insufficient groove transfer occurs at the time of molding and the error rate at the time of recording is increased; while, when the groove width of the pregroove is beyond 300 nm, pits formed at the time of recording are broadened to sometimes result in crosstalk and insufficient modulation degree.

The groove depth of the pregroove is required to be in the range of 30 to 200 nm, and the upper limit thereof is preferably 170 nm or below, far preferably 140 nm or below, further preferably 120 nm or below. In addition, the lower limit thereof is preferably 40 nm or above, far preferably 50 nm or above, further preferably 60 nm or above.
When the groove depth of the pregroove is below 30 nm, a sufficient degree of recording modulation cannot be achieved in some cases; while, when the groove depth of the pregroove is beyond 200 nm, there sometimes occurs a big drop in reflectivity.

The substrate used in a preferred mode [2] can be arbitrarily chosen from various materials hitherto used as substrate materials for optical information recording media. Examples of a substrate material usable in the mode [2] and those preferred over others are the same as those in the mode [1].
Moreover, the thickness of the substrate is required to be from 0.1 to 1.0 mm. And the preferable range thereof is from 0.2 to 0.8 mm, especially from 0.3 to 0.7 mm.

Additionally, for the purposes of improving the flatness and enhancing adhesion, it is preferable to form an undercoat layer on the side of the substrate where a light reflection layer as described hereinafter is to be provided. Examples of a material, a coating method and a thickness of the undercoat layer and those preferred over others are the same as those of the undercoat layer in the mode [1].

### [Write-once Recording layer in Mode [2]]

Detailed description of the write-once recording layer in a preferred mode [2] are the same as those of the write-once recording layer in the mode [1].

### [Light Reflection Layer in Mode [2]]

In a preferred mode [2], a light reflection layer is sometimes formed on the write-once recording layer for the purpose of enhancing laser light reflectivity and imparting the function of improving record/playback characteristics. Detailed description of the light reflect-ion layer in the mode [2] is the same as that of the light reflection layer in the mode [1].

### [Adhesive Layer in Mode [2]]

The adhesive layer in a preferred mode [2] is an arbitrary layer formed for enhancing adhesion of the light reflection layer to a protective substrate.
As a material forming the adhesive layer, photo-curable resins are suitable. For preventing warpage of a disc obtained, photo-curable resins small in curing shrinkage are especially favorable. Examples of such a photo-curable resin include UV-curable resins (UV-curable adhesives), such as SD-640 and SD-347 manufactured by Dainippon Ink and Chemicals, Incorporated. In order to secure resilience, it is appropriate that the thickness of the adhesive layer be from 1 to 1,000 µm.

### [Protective Substrate in Mode [2]]

As the protective substrate in a preferred mode [2] (dummy substrate), materials with the same properties and dimensions as the foregoing substrate has can be used. The thickness of the protective substrate is required to be from 0.1 to 1.0 mm, and the preferable range thereof is from 0.2 to 0.8 mm, especially from 0.3 to 0.7 mm.

### [Protective Layer in Mode [2]]

The optical information recording medium in a preferred mode [2] may have a protective layer with the intention of physically or chemically protecting the light reflection layer and the write-once recording layer, depending on its layer structure.
Examples of a material usable for the protective layer include inorganic materials, such as ZnS, ZnS-SiO₂, SiO, SiO₂, MgF₂, SnO₂ and Si₃N₄, and organic materials, such as thermoplastic resins, thermosetting resins and UV-curable resins.
For instance, the protective layer can be formed by laminating a film obtained by extrusion of plastic on the light reflection layer via an adhesive. Alternatively, it may be provided using a method such as vacuum deposition, sputtering or coating.

When a thermoplastic or thermosetting resin is used for forming the protective layer, a coating solution is prepared by dissolving the resin in an appropriate solvent, coated on the intended layer and then dried. In the case of using a UV-curable resin, the protective layer can also be formed in a manner that a coating solution is prepared by using the resin as it is or dissolving the resin in an appropriate solvent, coated on the intended layer, and then cured by irradiation with UV light. To these coating solutions, various additives, such as antistatic agents, antioxidants and UV absorbers, may further be added depending on the desired purposes. The thickness of the protective layer is generally from 0.1 µm to 1 mm.

### [Other Layers in Mode [2]]

In addition to the layers mentioned above, the optical information recording medium in a preferred mode [2] may have any other layers as far as they are not detrimental to effects of the invention. The detailed explanation of such additional layers is the same as that of the other layers in the mode [1].

### <Optical Information Recording Method>

Optical information recording in the invention is performed using the optical information recording medium in the preferred mode [1] or [2], e.g., in the following manner. First of all, the optical information recording medium is irradiated with recording light, such as semiconductor laser, from the substrate's side or the protective layer's side while rotating the recording medium with a constant linear speed (0.5 to 10 m/sec) or a constant angular speed. By the irradiation with such light, the recording layer absorbs the light and causes local rises in its temperature. And it is thought that such temperature rises induce physical or chemical changes (e.g., formation of pits), and further cause changes in its optical characteristics, thereby recording information. Recording light used in the invention is semiconductor laser light with an oscillation wavelength of 390 nm to 450 nm. Examples of a suitable light source include violet semiconductor laser light having its oscillation wavelength in the range of 390 to 415 nm and violet SHG laser light having its central oscillation wavelength at 425 nm, which is obtained by reducing the infrared semiconductor laser's central oscillation wavelength of 850 nm to the half by means of-an optical waveguide. In the terms of recording density in particular, the violet semiconductor laser having its oscillation wavelength in the range of 390 to 415 nm is used to advantage. The playback of the information thus recorded can be performed by irradiating the optical information recording medium with the semiconductor laser from the substrate's side or the protective layer's side while rotating the recording medium with the same constant linear speed as adopted above, and by detecting the light reflected from the recording medium.

### [Examples]

Then, the invention is illustrated in more detail by reference to the following examples, but these examples should not be construed as limiting the scope of the invention in any way.

An example of synthesis methods of cyanine dyes according to the invention is illustrated below.

### [Synthesis of Compound (I-1)]

[Ka36]

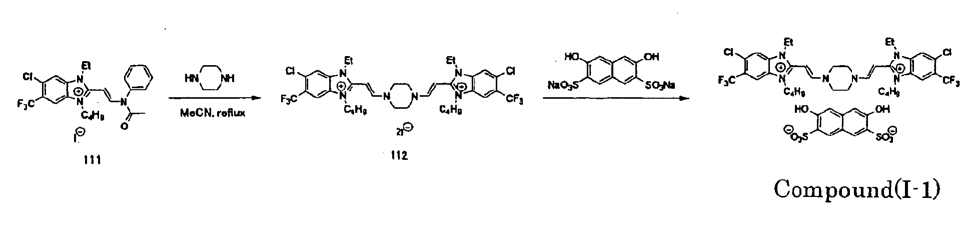

In 10 ml of acetonitrile, 2 g of Compound (111) and 146 mg of piperazine were heated under reflux for 6 hours. The reaction mixture was allowed to stand at room temperature. Precipitates thus deposited were filtered off, and washed with acetonitrile to give 1.16 g of Compound (112).
Next, 0.5 g of Compound (112) and 0.27 g of disodium 2,7-dihydroxynaphthalene-3,6-disulfonate were mixed in 10 ml of methanol and 10 ml of water, and heated under reflux for 1.5 hours. The reaction mixture was allowed to stand at room temperature. Precipitates thus deposited were filtered off, and washed with methanol to give 0.5 g of Compound (I-1). The structure of the compound obtained was ascertained by NMR. ¹HNMR (DMSO-d6) : d=0.9(t,6H), 1.4(t,10H), 1.7(m,4H), 3.8(br,8H), 4.5(m,8H), 5.4(br,2H), 6.9(s,2H), 7.8(d,2H), 7.9(s,2H), 8.3(d,4H), 10.4(s,2H)

[Synthesis of Compound (I-13)]

[Ka37]

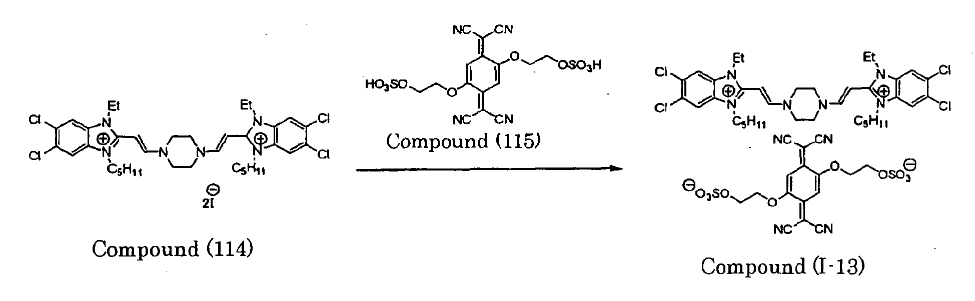

In a mixture of 10 ml of methanol and 10 ml of water, 0.1 g of Compound (114) was allowed to react with 78 mg of Compound (115) for 1.5 hours at room temperature. Precipitates thus deposited were filtered off, and washed with methanol to give 0.1 g of Compound (I-13). The structure of the compound obtained was ascertained by NMR. ¹HNMR (DMSO-d6) : d=0.9(t, 6H), 1.3(m, 14H), 1.7(br,4H), 3.8(br,8H), 4.1(br,4H), 4.4-4.5 (m,12H), 5.4(d,2H), 6.4(br,2H), 7.8(d,2H), 8.2(d,4H)

An example of synthesis methods of oxonol dyes according to the invention is illustrated below.

### [Synthesis of Compound (II-6)]

[Ka38]

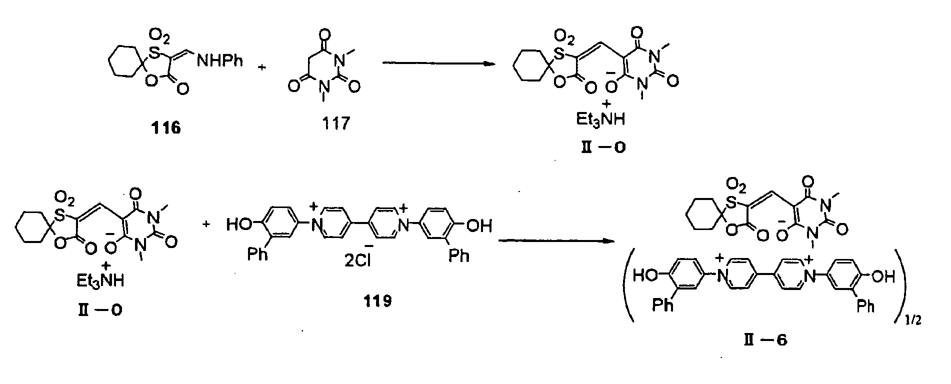

To 200 ml of acetonitrile in which 17.3 g of Compound (116) and 8.78 g of Compound (117) were dissolved, 5.31 ml of acetic anhydride was added dropwise with stirring, and thereto 7.91 ml of triethylamine was further added dropwise. The resulting admixture underwent reaction for 1 hour at 80°C, and the solvent was distilled away. The residue obtained was purified by column chromatography on silica gel to give 19.6 g of Compound (II-0).
In 10 ml of methanol, 0.67 g of Compound (II-0) was dissolved, and thereto 0.37 g of Compound (119) was added. Crystals thus precipitated were filtered off, and thereby 0.66 g of Compound (II-6) was obtained. The structure of the compound obtained was ascertained by NMR. ¹HNMR (DMSO-d6) : d=1.3(m,1H), 1.5(m,3H), 1.75(m,6H), 3.1(d,6H), 7.2-8.0(m,8H), 8.05(s,1H), 9.00(d,2H), 9.65(d,2H), 10.71(s,1H)

### EXAMPLE 1

### <Production of Optical Information Recording Media 1> (Making of Substrate)

A substrate was made from a polycarbonate resin by extrusion molding so as to have a thickness of 1.1 mm, an outside diameter of 120 mm, an inside diameter of 15 mm and a spiral pregroove (track pitch: 320 nm, groove width: on-groove width of 120 nm, groove depth: 35 nm, groove tilt angle: 65°, wobbling amplitude: 20 nm). The mastering of a stamper used at the time of extrusion molding was performed by use of laser cutting (351 nm).

### (Formation of Light Reflection Layer)

On the substrate, an APC light reflection layer (Ag: 98.1 mass %, Pd: 0.9 mass %, Cu: 1.0 mass %) was formed as a 100 nm-thick vacuum deposition layer by DC sputtering which was carried out using Cube made by Unaxis AG in an atmosphere of Ar. The thickness adjustment to the light reflection layer was made by sputtering time control.

### (Formation of Write-Once Recording Layer)

Some of the dye compounds relating to the invention and the combination of the dye compound and the nickel complex a shown by the following formula (See in Table 1) were each dissolved into 2, 2, 3, 3-tetrafluoropropanol, and thereby their respective coating solutions for recording layer formation were prepared. To each coating solution, a discoloration inhibitor was added in an amount of 10 mass% based on the dye dissolved therein. The concentration of each coating solution obtained was 2.5 mass%. Each of the dye-containing coating solutions thus prepared was applied to the foregoing light reflection layer under the condition of 23°C-50% RH by using a spin coating technique as the number of revolutions was increased from 300 rpm to 4, 000 rpm. Thereafter, the coating solution applied was allowed to stand for one hour at 23°C and 50% RH, thereby forming a write-once recording layer (thickness on the groove: 120 nm, thickness on the land: 170 nm).

Nickel Complex a

[Ka39]

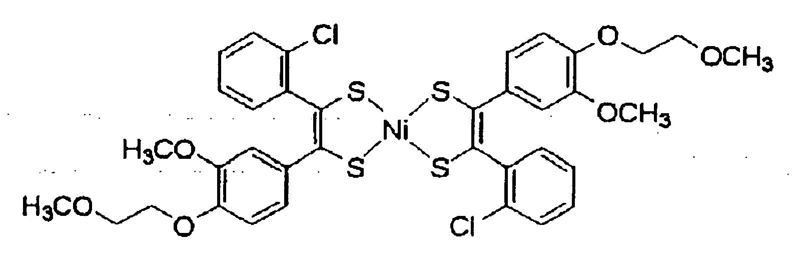

After the write-once recording layers were formed, they were subjected to annealing treatment in a clean oven. The annealing treatment was performed in a manner that the recording layers were kept at 80°C for 1 hour in a state of being supported by a vertical stack pole as spacing was secured between adjacent substrates with a spacer.

### (Formation of Barrier Layer)

On each of the write-once recording layers, a 5 nm-thick barrier layer was formed from ZnO-Ga₂O₃ (ZnO:Ga₂O₃= 7:3 (by mass)) by RF sputtering which was carried out using Cube made by Unaxis AG in an atmosphere of Ar.

### (Lamination of Cover Layer)

A polycarbonate film (Teijin PureAce, 80 µm in thickness) having an inside diameter of 15 mm, an outside diameter of 120 mm and a pressure-sensitive adhesive coating on one side was used as a cover layer. The thickness of the pressure-sensitive adhesive coating was adjusted so that the total thickness of the pressure-sensitive adhesive coating and the cover layer reached 100 µm.
Then, the cover layer was placed on the barrier layer so that the pressure-sensitive adhesive coating was brought into face-to-face contact with the barrier layer, and pressurized with a pressing member to result in lamination of those two layers.
Thus, optical information recording media of Examples 1 to 3 and Comparative Example 1 were produced.

### <Evaluations of Optical Information Recording Media 1>

### (1) C/N Ratio (Carrier-to-Noise Ratio) Evaluations:

On each of the optical information recording media produced, 0.16-µm signals (2T) were recorded and played back at a clock frequency of 66 MHz and a linear velocity of 5.28 m/s by use of an optical disc drive evaluation device (DDU1000, made by Pulstec Industrial Co., Ltd.) equipped with 403-nm laser and a pickup with an NA of 0.85, and C/N ratios (after recording) were measured with a spectrum analyzer (Pulstec MSG2). In addition, the recording media were irradiated with a Xe lamp (a merry-go-round type light-stability testing machine made by Eagle Engineering, Cell Tester III-500W, equipped with a heat wave reflecting filter) for 12 hours, and thereafter pit observations thereof were performed. Additionally, in these evaluations, the present optical information recording method was used and the recording was performed on the grooves. Therein, the recording power was 5 mW and the playback power was 0.3 mW. Results obtained are shown in Table 1. Herein, the C/N ratios (after recording) of 25 dB or above mean that the reproduced signals have sufficient strength and are suitable for practical use.

[Hyol]

**Table 1**

| Example No. | Methine Dye | Organic Oxidant | Reduction Potential of Organic Oxidant (V) | Potential Difference b-a (V) | Record/Playback Characteristic (before irradiation with Xe lamp) | Record/Playback Characteristic (after 12-hour irradiation) |
|---|---|---|---|---|---|---|
| | | | | | C/N | Reading of Pits |
| Example 1 | Compound (II-3) | | -0.3 | 1.2 | 38 | capable |
| Example 2 | Compound (II-4) | | -0.4 | 1.3 | 44 | capable |
| Example 3 | Compound (II-6) | | -0.2 | 1.1 | 43 | capable |
| Comparative Example 1 | Compound (II-0) | Nickel Complex a | | | 25 | incapable |

As can be seen from the results shown in Table 1, all the samples incorporating the oxonol dye compounds relating to the invention had not only excellent record/playback characteristics, but also little degradation in performance after irradiation with a Xe lamp, namely improved light stability, compared with the sample incorporating the combination with the nickel complex a as a discoloration inhibitor currently in use.

Further, the optical information recording media produced were stored for 24 hours under the circumstances of a temperature of 60°C and a relative humidity of 80%, and the same measurements as mentioned above were made thereon (warming and humidification testing). As a result, it was found that pits on the sample of Comparative Example 1 was incapable of reading. By contrast, pits on each of the samples of Examples 1 to 3 was capable of reading.

As can be seen from the results shown in Table 1 and those in the warming and humidification testing, all the samples incorporating the oxonol dyes relating to the invention (Examples 1 to 3) were superior in record/playback characteristics, light stability and keeping quality under the circumstances of high temperature and high humidity to the sample incorporating the combination of the oxonol dye relating to the invention and the discoloration inhibitor currently in use.

In the cases where optical information recording media were also produced using Compounds (II-9), (II-10), (II-13), (11-14) and (II-15), respectively, it was ascertained that recording layers were capable of being formed as in the cases of Examples 1 to 3, and their record/playback characteristics were superior, degradation in their performance after irradiation with a Xe lamp was slight and their keeping qualities under the circumstances of high temperature and high humidity were also good.

It can be seen from the results shown in Table 1 that the samples incorporating combinations of cyanine dyes relating to the invention and organic oxidants represented by formula (A) were noticeably reduced in dye degradation even after irradiation with a Xe lamp. In the special samples where cyanine dyes or oxonol dyes in combination with organic oxidants so that the differences between oxidation potentials of the cyanine or oxonol dyes and reduction potentials of the organic oxidants (b-a) were within the range 0<b-a<1.6, the dyes remained in large amounts, so the samples proved of satisfactory light stability.

### Industrial Applicability

The invention are applicable to an optical information recording medium and an information recording method which each permit recording and playback of information by means of laser light. It is particularly preferable that the invention is applied to a heat-mode optical information recording medium suitable for recording of information by means of shortwave laser light with wavelengths of 400 to 410 nm.
Although the invention are illustrated above in detail and by reference to its exemplary embodiments, it is apparent to persons skilled in the art that various changes and modifications can be made without departing from the spirit and scope of the invention.
The present application is based on Japanese Patent Application (Tokugan 2005-075424) applied in March 16, 2005, and the descriptions therein are incorporated into the present application as a reference.

## Claims

1. A heat-mode information recording medium which is an optical information recording medium having on a substrate a recording layer which permits recording of information by irradiation with laser light of 440 nm or below, wherein the recording layer comprises a methine dye and an organic oxidant.

2. The heat-mode information recording medium as described in claim 1, wherein the substrate is a transparent disk-form substrate on which a pregroove having a track pitch of 0.2 to 0.5 µm is formed and the recording layer is provided on the pregroove-formed side of the substrate.

3. The information recording medium as described in claim 1 or 2, wherein the methine dye has an oxidation potential b in a range of 0.5<b<1.2.

4. The information recording medium as described in any of claims 1 to 3, comprising a recording layer containing the organic oxidant whose reduction potential is nobler than -0.4 volt.

5. The information recording medium as described in any of claims 1 to 4, wherein the organic oxidant is a quaternary ammonium ion or a pyridinium ion.

6. The information recording medium as described in any of claims 1 to 5, wherein the organic oxidant is a compound represented by the following general formula (D) or (E); 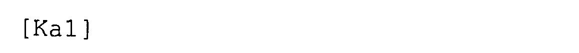 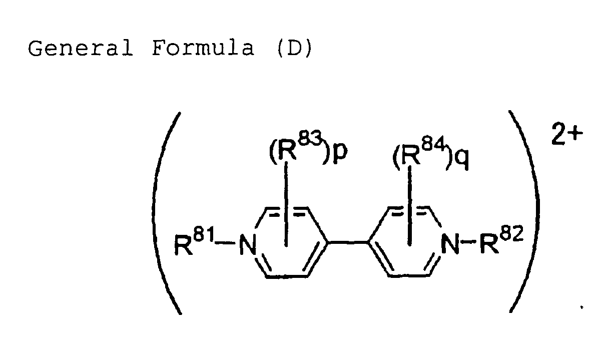 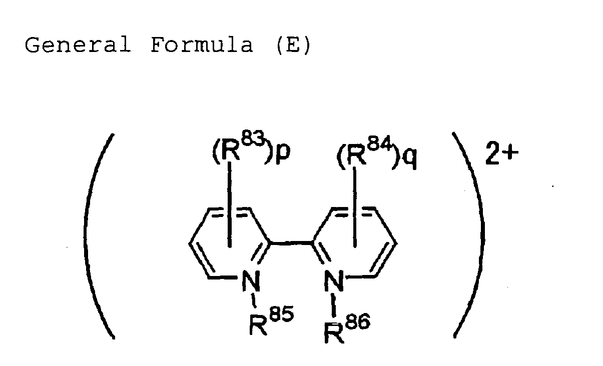 wherein R⁸¹ and R⁸² represent alkyl groups, alkenyl groups or aryl groups; R⁸³ and R⁸⁴ represent substituent groups (including substituent atoms); R⁸⁵ and R⁸⁶ represent alkyl groups, an alkenyl group, an alkynyl group or an aryl group; or R⁸¹ and R⁸², R⁸³ and R⁸⁴, or R⁸⁵ and R⁸⁶ may combine with each other to form a ring; p and q represent integers of 0 to 4 and, when p is 2 or above, R⁸³s may be the same or different, while when q is 2 or above R⁸⁴s may be the same or different.

7. The information recording medium as described in any of claims 1 to 6, wherein the methine dye is an oxonol dye represented by a general formula (C-1); 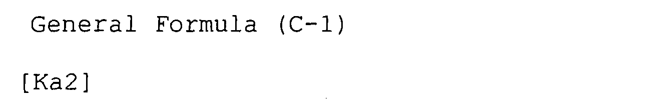 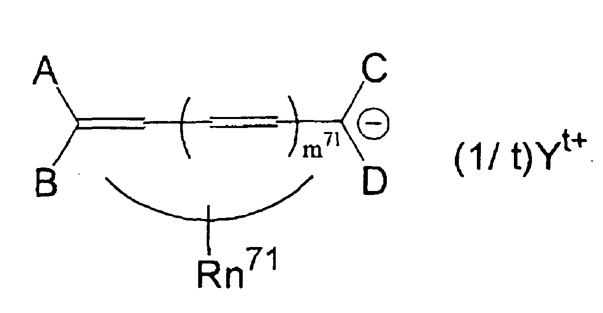 wherein A, B, C and D represent electron-attracting groups, and A and B, or C and D may combine with each other to form a ring, but when they don't combine with each other, A and B are electron-attracting groups whose Hammett's σp values have a combined total of 0.6 or above, and C and D are also electron-attracting groups whose Hammett's σp values have a combined total of 0.6 or above; R represents a substituent on a methine carbon; m⁷¹ represents an integer of 0 or 1; n⁷¹ represents an integer of 0 to 2m⁷¹+1; when n⁷¹ is an integer of 2 or above, a plurality of Rs may be the same or different- or they may combine with each other to form a ring; Y^{t+} represent a t-valent cation; and t represents an integer of 1 to 10.

8. The information recording medium as described in any of claims 1 to 7, wherein the methine dye is an oxonol dye represented by a general formula (C-II), a general formula (C-III) or a general formula (C-IV); 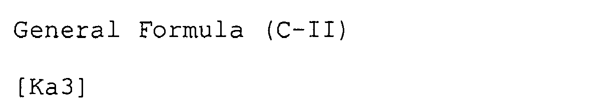 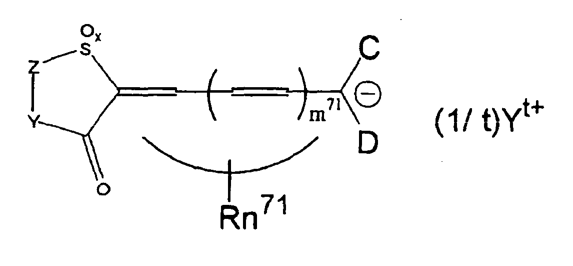 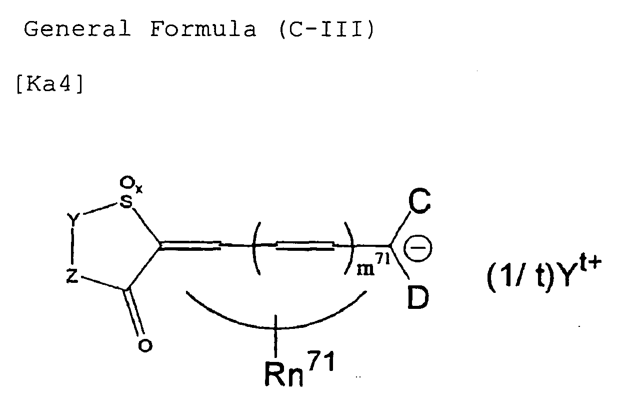 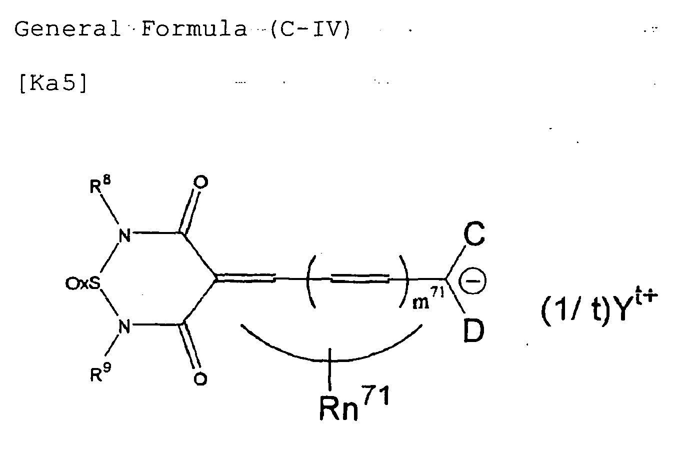 wherein C and D represent electron-attracting groups, and they may combine with each other to form a ring, but in the case of forming no ring, C and D are electron-attracting groups whose Hammett's σp values have a combined total of 0.6 or above; R represents a substituent on a methine carbon; m⁷¹ represents an integer of 0 or 1; n⁷¹ represents an integer of 0 to 2m⁷¹+1, and when n⁷¹ is an integer of 2 or above, a plurality of Rs may be the same or different or they may combine with each other to form a ring; Y^{t+} represents a t-valent cation; t represents an integer of 1 to 10; Y represents either of -O-, or -NR¹-, or -CR²R³-, R¹, R², R³, R⁸ and R⁹ each represents a hydrogen atom or a substituent independently; Z represents a substituted or unsubstituted alkylene group; and x represents 1 or 2.

9. The information recording medium as described in any of claims 1 to 7, wherein the methine dye is an oxonol dye represented by a general formula (C-V) or a general formula (C-VI); 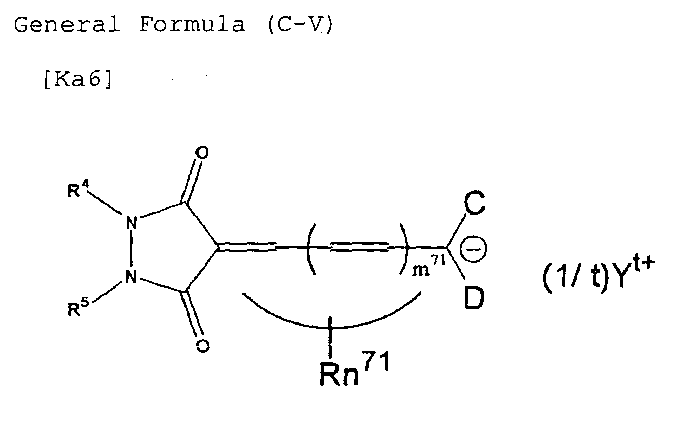 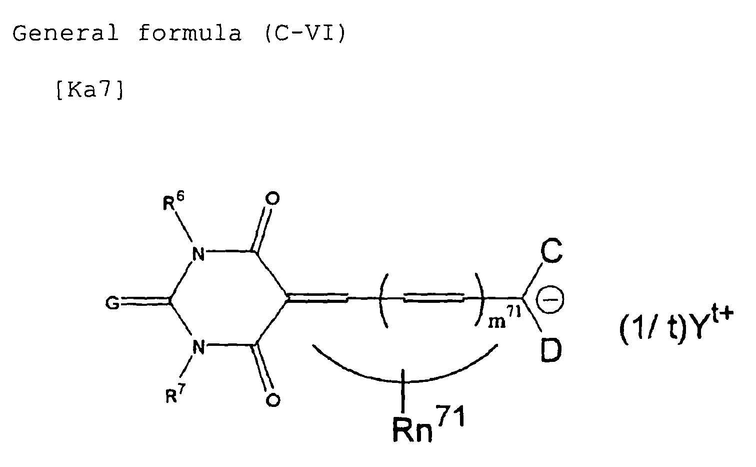 wherein C and D represent electron-attracting groups, and they may combine with each other to form a ring, but in the case of forming no ring, C and D are electron-attracting groups whose Hammett's σp values have a combined total of 0.6 or above; R represents a substituent on a methine carbon; m⁷¹ represents an integer of 0 or 1; n⁷¹ represents an integer of 0 to 2m⁷¹+1, and when n⁷¹ is an integer of 2 or above, a plurality of Rs may be the same or different or they may combine with each other to form a ring; Y^{t+} represent a t-valent cation; t represents an integer of 1 to 10; R⁴ to R⁷ each represent a hydrogen atom or a substituent independently; and G represents an oxygen atom or a sulfur atom.

10. The information recording medium as described in any of claims 7 to 9, wherein the m⁷¹ is 0.

11. The heat-mode optical information recording medium having on a substrate a recording layer which permits recording of information by irradiation with laser light of 440 nm or below as described in any of claims 1 to 10, wherein the recording layer in which a methine dye and an organic oxidant having a reduction potential nobler than -0.4 volt are contained and they are combined so as to satisfy a relation of 1.0≤b-a≤1.3 with respect to a difference between an oxidation potential b volt of the methine dye and a reduction potential a volt of the organic oxidant is provided on a transparent disk-form substrate on which a pregroove having a track pitch of 0.2 to 0.5 µm is formed, and that on the side where the pregroove is formed.
